# EUROPÄISCHE PATENTSCHRIFT

(11) **EP 3 593 420 B1**
(45) Veröffentlichungstag und Bekanntmachung des Hinweises auf die Patenterteilung: **15.12.2021**
(21) Anmeldenummer: 18717566.6
(22) Anmeldetag: 09.04.2018
(51) Int. Cl.: H01R 43/20, H01R 43/28, B25J 11/00, H02G 1/12

(54) **ANLAGE SOWIE VERFAHREN ZUM AUTOMATISIERTEN HERSTELLEN EINES KABELSATZES**
SYSTEM AND METHOD FOR THE AUTOMATED PRODUCTION OF A CABLE SET
INSTALLATION ET PROCÉDÉ SERVANT À FABRIQUER DE MANIÈRE AUTOMATISÉE UN JEU DE CÂBLES

(30) Priorität: 10.04.2017 DE 102017206139
(43) Veröffentlichungstag der Anmeldung: 15.01.2020
(73) Patentinhaber: LEONI Bordnetz-Systeme GmbH, 97318 Kitzingen (DE)
(72) Erfinder: DIETLEIN, Fabian, 91413 Neustadt/Aisch (DE); GUNI, Christian, 97318 Kitzingen (DE); HEISLER, Paul, 92224 Amberg (DE); JAECKLEIN, Roland, 97318 Kitzingen (DE); MARTINS, Paulo, 97318 Kitzingen (DE); TAVSEL, Onur, 97082 Würzburg (DE)
(74) Vertreter: FDST Patentanwälte
(86) Internationale Anmeldenummer: PCT/EP2018/059016
(87) Internationale Veröffentlichungsnummer: WO 2018/189102

(56) Entgegenhaltungen:
- EP-A1- 0 661 721
- EP-A2- 0 145 216
- WO-A1-02/089267
- WO-A1-2016/158339
- DE-A1-102015 214 929
- JP-A- H05 234 659
- US-A1- 2002 144 395

## Beschreibung

Die Erfindung betrifft eine Anlage sowie ein Verfahren zum automatisierten Herstellen eines Kabelsatzes, insbesondere für ein Kraftfahrzeug.

Ein Kabelsatz weist allgemein eine Vielzahl von einzelnen Leitungselementen auf, die miteinander verbunden sind. Bei den Leitungselementen handelt es sich insbesondere um Adern, verdrillte Adern (paare), Lichtwellenleiter oder auch vorgefertigte Teilleitungen, beispielsweise Mantelleitungen. Unter Ader wird allgemein ein von einer Isolierung umgebener Leiter, entweder ein Leiterdraht oder ein Litzenleiter verstanden. Ein jeweiliger Kabelsatz weist dabei eine verzweigte Struktur auf, die einer späteren Verlegestruktur beispielsweise innerhalb eines Kraftfahrzeugs oder in einer sonstigen Anlage entspricht. Unter verzweigter Struktur wird hierbei verstanden, dass einzelne Leitungselemente an unterschiedlichen Positionen des Kabelsatzes von einem Hauptstrang abzweigen. Üblicherweise sind beim fertigen Kabelsatz zumindest an einigen der Leitungselemente endseitig Stecker oder sonstige Kontaktelemente angeschlagen.

Das Herstellen und Handling derartiger Kabelsätze ist aufwendig. Speziell in der Kraftfahrzeugindustrie gibt es ― selbst bei einem gleichen Kraftfahrzeug-Modell ― aufgrund der unterschiedlichen und vom Kunden individuell vorgebbaren Ausstattungsvarianten eine Vielzahl von unterschiedlichen Kabelsatz-Typen. Üblicherweise wird ein Kabelsatz für ein individuell vom Kunden konfiguriertes Kraftfahrzeug erst nach Bestelleingang des Kunden gefertigt. Aufgrund der gewünschten kurzen Lieferzeiten ist ein möglichst schnelles Herstellen eines individuellen Kabelsatzes angestrebt.

Aufgrund der großen Typen- und Variantenvielfalt dieser individuellen Kabelsätze ist eine Automatisierung der Herstellung derartiger Kabelsätze schwierig, weswegen bis heute bei der Herstellung von Kabelsätzen speziell für die Kraftfahrzeugindustrie weiterhin ein hoher manueller Anteil erforderlich ist. Typischerweise werden die einzelnen Leitungselemente entlang von sogenannten Kabelbrettern entsprechend einer vorgegebenen individuellen verzweigten Struktur manuell verlegt und anschließend werden die einzelnen Leitungselemente beispielsweise durch Bandierungen manuell aneinander fixiert.

Aus der DE 33 27 583 A1 ist ein teilautomatisiertes Verfahren zur Herstellung von Kabelbäumen aus Einzelleitern zu entnehmen. Bei diesem Verfahren werden zunächst die erforderlichen und auf eine vorbestimmte Länge abgelängten, vorgefertigten Einzelleiter mit Hilfe von Kupplungsstücken lösbar miteinander verbunden und zu einer Endlosleitung zusammengefasst, welche beispielsweise auf einer Aufwickelvorrichtung aufgewickelt werden.

Anschließend werden die Kupplungsstücke von den Einzelleitern wieder gelöst und in einer weiteren Einrichtung werden an den Enden Steckergehäuse befestigt und anschließend wird der Kabelbaum ausgebildet.

Aus der DE 38 20 638 C2 ist ein weiteres automatisiertes Verfahren zur Herstellung eines Kabelsatzes zu entnehmen. Hierbei werden vorgefertigte Einzelelemente mit Hilfe eines Industrieroboters in Steckergehäuse eingesetzt. Die Steckergehäuse sind dabei entlang einer Linie an einem vertikal orientierten Verlegebrett angebracht. Die Einzelleitungen zwischen zwei benachbarten Steckergehäusen hängen lose nach Unten herunter. Anschließend erfolgt noch ein Umwickeln, wobei hierzu der Industrieroboter einen Werkzeugwechsel vornimmt. In einer Ausführungsvariante sind die Steckergehäuse auf Drehtellern angeordnet, die entlang einer Linearführung verfahrbar sind. Nach dem Bestücken der Steckergehäuse verfahren die Drehteller mit den darauf angebrachten Steckergehäusen an eine vorgegebene Position, die einer vorgegebenen Position des Steckergehäuses am Gabelsatz entspricht.

Aus der EP 0 661 721 A1 ist ein Verfahren zur automatisierten Anbringung einer Bandierung an einem Leitungsbündel zu entnehmen. Die einzelnen Leitungen werden zunächst automatisiert abgelängt, abisoliert und mit Kontaktelementen versehen, mit Steckergehäusen versehen und dadurch zu einem Kabelsatz zusammengefasst, an den schließlich die Bandierung angebracht wird.

Die WO 02/089267 A1 zeigt eine Anlage zur automatisierten Bearbeitung von Enden von Drähten.

Die EP 0 145 216 A2 beschreibt eine weitere Anlage zur automatisierten Kabelsatzfertigung zu entnehmen.

Die US 2018/0075951 A1, die US 2002/0144395 A1 sowie die JP H 05 234 659 A befassen sich mit der automatiserten Bestückung von Steckergehäusen mit Leitungselementen und der Ausbildung eines Kabelsatzes.

Ausgehend hiervon liegt der Erfindung die Aufgabe zugrunde, eine Anlage sowie ein Verfahren zum automatisierten Herstellen von derartigen Kabelsätzen mit verzweigter Struktur zu ermöglichen.

Die Aufgabe wird gemäß der Erfindung gelöst durch eine Anlage zum automatisierten Herstellen eines Kabelsatzes mit den Merkmalen des Anspruchs 1. Die Erfindung wird weiterhin gelöst durch ein Verfahren zum automatisierten Herstellen eines derartigen Kabelsatzes mit den Merkmalen des Anspruchs 15. Die im Hinblick auf die Anlage angeführten Vorteile und bevorzugten Ausgestaltungen sind sinngemäß auch auf das Verfahren zu übertragen.

Die Anlage ist grundsätzlich untergliedert in einen ersten Teil sowie einen zweiten Teil. Der erste Teil dient zur automatisierten Vorbereitung und Bereitstellung der einzelnen Leitungselemente. Im zweiten Teil wird dann aus den vorbereiteten einzelnen Leitungselementen der verzweigte Kabelsatz zusammengestellt. Sämtliche Schritte im ersten Teil als auch im zweiten Teil erfolgen dabei vollautomatisch ohne manuelle Eingriffe.

Der erste Teil weist einen modularen Aufbau auf mit mehreren ersten Bearbeitungsstationen. Der erste Teil weist dabei mehrere, vorzugsweise alle, der folgenden ersten Bearbeitungsstationen auf:
- Eine Schneidstation, an der Leitungselemente auf die gewünschte Länge abgelenkt werden. Hierzu werden die auf einer Spule bevorrateten Endlos-Elemente, insbesondere Adern, abgerollt und abgeschnitten.
- Eine Abisolierstation, an der Leitungsenden der Leitungselemente abisoliert werden. Die Abisolierstation ist dabei beispielsweise in der Schneidstation integriert.
- Eine Kontaktierungsstation, an der Kontaktelemente an den abisolierten Leitungsenden angebracht werden.
- Eine Pufferstation, an der die an den vorhergehenden Bearbeitungsstationen vorbereiteten Leitungselemente zwischengelagert werden.
- Ein erstes Transportsystem mit ersten Transportern, mit deren Hilfe die Leitungselemente individuell zu den einzelnen ersten Bearbeitungsstationen zugeführt bzw. zwischen den einzelnen ersten Bearbeitungsstationen transportiert werden.

Insbesondere weist der erste Teil zumindest das erste Transportsystem, die Pufferstation sowie eine der weiteren ersten Bearbeitungsstationen, speziell die Kontaktierungsstation auf. Die Leitungselemente in den unterschiedlichen Vorfertigungsstadien werden zwischen einer jeweiligen ersten Bearbeitungsstation jeweils von einem ersten Transporter aufgenommen, zur nächsten ersten Bearbeitungsstation verfahren und dort für einen weiteren Bearbeitungsschritt an eine Bearbeitungseinheit einer jeweiligen Bearbeitungsstation übergeben. Nach Durchführung des Bearbeitungsschrittes wird das Leitungselement wieder an den ersten Transporter übergeben und weitertransportiert.

In der Pufferstation werden dann eine Vielzahl von unterschiedlich vorbereiteten Leitungselementen, die sich beispielsweise im Hinblick auf ihre Länge, ihre Art (Einzelader oder verdrilltes Aderpaar) und/oder ihre Geometrie (z.B. Durchmesser, Leiterquerschnitt) unterscheiden, zwischengelagert. Bei den Leitungselementen handelt es sich speziell um Adern oder verdrillte Adern.

Der zweite Teil der Anlage weist ebenfalls einen modularen Aufbau auf und zeigt mehrere, vorzugsweise alle, der nachfolgenden zweiten Bearbeitungsstationen:
Eine Steckerstation, an der vorgegebene vorbereitete Leitungselemente zusammengestellt werden, und zwar genau die Anzahl und ggf. die unterschiedlichen Arten, die für den zu fertigenden Kabelsatz benötigt werden. Hierzu sind an der Steckerstation ein Manipulator sowie bewegbare zweite Transporter bereitgestellt. Die zweiten Transporter sind zumindest teilweise mit einem Steckergehäuse bestückt bzw. bestückbar, wobei das Steckergehäuse zur Aufnahme der Kontaktelemente der vorbereiteten Leitungselemente dient.

Vorzugsweise ist ergänzend bei Bedarf vorgesehen, dass ein Teil der zweiten Transporter zur Aufnahme von miteinander stoffflüssig verbundenen Leitungsenden von mehreren Leitungselementen vorgesehen sind. In diesem Falle weist der zweite Teil und insbesondere die Steckerstation noch eine Verbindungsvorrichtung zum stoffflüssigen Verbinden der abisolierten Leitungsenden von mehreren Leitungselementen auf. Das stoffflüssige Verbinden erfolgt hierbei beispielsweise durch Verschweißen oder Verlöten. Der an der Steckerstation vorgesehene Manipulator ist vorzugsweise als ein Handlingroboter, speziell ein handelsüblicher Industrieroboter, speziell ein mehrachsiger Gelenkarmroboter ausgebildet. Dieser wird herangezogen, um die Kontaktelemente in ein jeweiliges Steckergehäuse einzulegen und/oder um den zweiten Transporter mit den stoffflüssig miteinander verbundenen Enden zu bestücken. An der Steckerstation werden daher vollautomatisch die für den Kabelsatz erforderlichen, vorbereiteten Leitungselemente ausgewählt und mit den erforderlichen Steckergehäusen bestückt.

Nachfolgend zur Steckerstation ist eine Verteilstation angeordnet, an der die zweiten Transporter mit den daran gehaltenen Leitungselementen/Steckergehäusen zumindest in einer zweidimensionalen Ebene in eine vorgegebene Verteilstruktur verteilt werden. Die Verteilstruktur entspricht dabei insbesondere der verzweigten Struktur des Kabelsatzes. Mit Hilfe der zweiten Transporter werden daher in der Verteilstation die einzelnen Leitungsenden der Leitungselemente bzw. der Steckergehäuse an ihre Endpositionen entsprechend der verzweigten Struktur des Kabelsatzes verfahren. An der Verteilstation wird daher quasi der Kabelsatz aufgespreizt, so dass die einzelnen Leitungselemente die verzweigte Struktur des Kabelsatzes ausbilden.

Weiterhin ist eine Fixierstation vorgesehen, die zur Fixierung der Leitungselemente aneinander ausgebildet ist. Durch die zuvor vorgenommene Verteilung werden durch die Fixierung die Leitungselemente aneinander in der verzweigten Struktur des Kabelsatzes fixiert.

Allgemein ist im zweiten Teil ein zweites Transportsystem ausgebildet, welches zum Verfahren der zweiten Transporter zwischen den einzelnen Bearbeitungsstationen ausgebildet ist. Dieses zweite Transportsystem dient insbesondere auch zur Verteilung der zweiten Transporter innerhalb der Verteilstation.

Der zweite Teil weist dabei zumindest das zweite Transportsystem, die Verteilstation und vorzugsweise zumindest die Fixierstation und/oder die Steckerstation auf.

Mit einer derartigen Anlage ist ein vollautomatisiertes Herstellen eines Kabelsatzes mit einer verzweigten Struktur in einfacher Weise und zugleich prozesssicher ermöglicht. Wesentliche Gesichtspunkte sind darin zu sehen, dass im ersten Teil die Leitungselemente vorbereitet werden, d.h. insbesondere die Kontaktelemente angeschlagen werden und die Leitungselemente auf die gewünschte Länge abgelängt werden. Dabei werden unterschiedliche Typen von Leitungselementen, (insbesondere Adern/Aderpaare mit unterschiedlichen Querschnitten) auf Spulen bevorratet. Die vorbereiteten Leitungselemente werden für den jeweiligen individuellen Kabelsatz aus der Pufferstation entnommen und an der Steckerstation zusammengestellt und zugleich werden die Steckergehäuse mit den Kontaktelementen bestückt. Anschließend wird der Kabelsatz an der Verteilstation quasi aufgespreizt und in dieser aufgespreizten Position fixiert.

Weiterhin ist der modulare Aufbau von besonderer Bedeutung, da hierdurch insgesamt ein flexibler Aufbau der Gesamtanlage erreicht ist. Die Anlage ist durch den modularen Aufbau individuell konfigurierbar und/oder erweiterbar.

In zweckdienlicher Ausgestaltung grenzen die ersten Bearbeitungsstationen und/oder die einzelnen zweiten Bearbeitungsstationen unmittelbar aneinander an, so dass eine rasche und unmittelbare Übergabe der Leitungselemente bzw. des jeweils teilgefertigten Kabelsatzes erfolgen kann. Im zweiten Teil wird zwischend den zweiten Bearbeitungsstationen jeweils der komplette Kabelsatz (in den unterschiedlichen Fertigungsstufen) übergeben.

Bevorzugt sind die einzelnen ersten und/oder die einzelnen zweiten Bearbeitungsstationen jeweils vertikal ausgerichet. Hierunter wird verstanden, dass die Leitungselemente im ersten Teil bzw. der jeweils teilgefertigte Kabelsatz im zweiten Teil in vertikaler Richtung zwischen den einzelnen Transportstationen transportiert werden und beispielsweise auch in der vertikalen Orientierung bearbeitet werden. Die Leitungselemente im ersten Teil werden daher zwischen den einzelnen Bearbeitungsstationen jeweils hängend weitertransportiert. Insbesondere werden sie auch in der Pufferstation hängend gesammelt. Im Falle des zweiten Teils werden die einzelnen Leitungselemente innerhalb beispielsweise der Verteilstation in eine zweidimensionale Verlegestruktur aufgespreizt, wobei diese Verlegestruktur innerhalb einer Ebene ausgebildet ist, die vertikal orientiert ist.

Zur Ausbildung einer jeweiligen Bearbeitungsstation weist diese jeweils ein Gerüst auf, in dem beispielsweise die erforderlichen Bearbeitungseinheiten zum Bearbeiten beispielsweise der Leitungselemente, wie Abisolieren, angeordnet sind. Die einzelnen Bearbeitungsstationen sind daher insgesamt vorzugsweise regalartig ausgebildet. Die einzelnen Regale oder Gerüste schließen sich dabei vorzugsweise unmittelbar aneinander an. Durch diese Gerüststruktur ist in einfacher Weise der gewünschte modulare Aufbau erzielt. Benachbarte Gerüste sind dabei insbesondere mechanisch miteinander verbunden.

Die Gerüste des ersten Teils sind untereinander jeweils vorzugsweise entlang einer Richtung linear aneinander angeordnet. Dies erleichtert insbesondere auch den Transport der einzelnen Leitungselemente zwischen den einzelnen Bearbeitungsstationen.

Ergänzend sind auch die Gerüste des zweiten Teils entlang linear aneinander angeordnet. Bevorzugt sind sämtliche Bearbeitungsstationen mit ihren Gerüsten sowohl des ersten Teils als auch des zweiten Teils linear aneinander angeordnet, so dass insgesamt eine lineare Gerüstanordnung ausgebildet ist. Hierdurch ist quasi eine automatisierte Fertigungsstraße erhalten, die modular und gleichzeitig kompakt aufgebaut ist. Die einzelnen Gerüste haben dabei vorzugsweise jeweils die gleiche Tiefe.

Innerhalb der Gerüste insbesondere des ersten Teils sind dabei zweckdienlicherweise Bearbeitungseinheiten oder Bearbeitungsmaschinen zur Durchführung der Funktionen der jeweiligen Bearbeitungsstation angeordnet. Hierbei handelt es sich im Fall der Schneidstation um eine Schneidmaschine, im Fall der Abisolierstation um eine Abisoliermaschine und im Falle der Kontaktierungsstation beispielsweise um eine Crimpmaschine.

Im Hinblick auf den automatischen Transport der Leitungselemente im ersten Teil bzw. des jeweils teilgefertigten Kabelsatzes im zweiten Teil sind das erste und/oder das zweite Transportsystem geeignet ausgebildet. Insbesondere ist ein erstes und/oder zweites Schienensystem mit jeweils ersten bzw. zweiten Schienen ausgebildet. Entlang dieser Schienen sind die ersten Transporter bzw. die zweiten Transporter verfahrbar.

Dieses Schienensystem mit den ersten bzw. zweiten Schienen ist dabei vorzugsweise jeweils an einer Vorderseite der Gerüste angeordnet. Insbesondere in Kombination mit der linearen Gerüstanordnung ergibt sich hierdurch ein effizient ausgebildetes Transportsystem für die Weiterführung der einzelnen Leitungselemente. Die ersten Schienen und/oder die zweiten Schienen verlaufen hierbei insbesondere horizontal an einer Vorderseite der jeweiligen Gerüste. Zweckdienlicherweise ist dabei jeder Bearbeitungsstation eine erste Schiene bzw. eine zweite Schiene zugewiesen, also unmittelbar am jeweiligen Gerüst der jeweiligen Arbeitsstation befestigt. Die Schienen benachbarter Bearbeitungsstationen fluchten miteinander, so dass also eine Übergabe der ersten bzw. zweiten Transporter zwischen benachbarten Bearbeitungsstationen ermöglicht ist. Durch diese Zuordnung der individuellen Schienen zu den individuellen Bearbeitungsstationen wird der modulare Aufbau weitergeführt. Eine jeweilige Bearbeitungsstation weist daher einen Teil des Schienensystems auf. Eine Anlage kann daher problemlos individuell konfiguriert werden. Die Schienen benachbarter Bearbeitungsstationen werden typischerweise mechanisch miteinander verbunden.

Das erste Schienensystem weist eine umlaufende Führungsschiene auf, die sich insbesondere aus den ersten Schienen und weiteren Umlenkelementen zusammensetzt. Entlang dieser Führungsschienen sind die ersten Transporter umlaufend innerhalb des ersten Teils der Anlage verfahrbar. Insbesondere sind sie über die Führungsschiene von der Schneidstation bis zur Pufferstation und wieder zurück verfahrbar. Ein jeweiliger erster Transporter verfährt daher kontinuierlich von der Schneidstation beginnend die einzelnen ersten Bearbeitungsstationen an und kontinuierlich bis zur Pufferstation, wo das im Transporter gehaltene vorgefertigte Leitungselement dann an die Pufferstation übergeben wird. Anschließend wird der jeweilige erste Transporter wieder entlang eines rückführenden Teils der umlaufenden Führungsschiene zurückgeführt.

Das zweite Schienensystem weist vorzugsweise mehrere parallel zueinander orientierte zweite Schienen auf, welche in Vertikalrichtung zueinander frei, also unabhängig voneinander, und in Abhängigkeit der vorgegebenen verzweigten Struktur des Kabelsatzes verstellbar sind. Durch diese Maßnahme wird durch ein vertikales Verstellen der zweiten Schienen, an denen jeweils zweite Transporter befestigt sind, in Vertikalrichtung auseinandergefahren. Durch die ergänzende Verfahrbarkeit der zweiten Transporter entlang der Schienen ergibt sich dadurch die Möglichkeit, dass die zweiten Transporter in die gewünschte Verteilstruktur in zwei Dimensionen verteilt werden.

Zweckdienlicherweise weisen mehrere der zweiten Bearbeitungsstationen jeweils mehrere dieser in Vertikalrichtung zueinander frei verstellbare zweite Schienen auf. Die zweiten Schienen benachbarter zweiter Bearbeitungsstationen fluchten dabei jeweils miteinander. Ergänzend werden die zweiten Transporter im Betrieb derart angesteuert, dass diese in der vorgegebenen Verteilstruktur zwischen benachbarten zweiten Bearbeitungsstationen übergeben werden. Der aufgespreizte Kabelsatz wird daher durch diese Maßnahme in dieser aufgespreizten Form über die einzelnen Bearbeitungsstationen hinweg geführt. Durch die Aufrechterhaltung der aufgespreizten Verteilstruktur speziell in der Fixierstation wird das Fixieren der Leitungselemente aneinander in der gewünschten Verteilstruktur und damit in der verzweigten Struktur des Kabelsatzes ermöglicht und aufrecht erhalten. Diese

Übergabe in der verzweigten Struktur erfolgt dabei insbesondere zwischen der Verteilstation und die dieser unmittelbar nachfolgenden Fixierstationen sowie vorzugsweise bis hin zu einer Endstation, an der der Kabelsatz dann beispielsweise für einen Versand/Verpackung vorbereitet wird.

Ähnlich wie beim ersten Transportsystem ist auch beim zweiten Transportsystem ein umlaufendes Schienensystem ausgebildet, so dass die zweiten Transporter zunächst sukzessive zwischen den einzelnen aufeinanderfolgenden zweiten Bearbeitungsstationen verfahren werden können und dann wieder an einen Ausgangspunkt zurückgeführt werden können. Hierzu ist beim zweiten Transportsystem insbesondere eine gemeinsame Rückführschiene angeordnet. Diese ist von der letzten zweiten Bearbeitungsstation zur ersten zweiten Bearbeitungsstation, die insbesondere durch die Steckerstation gebildet ist, rückgeführt.

Zum Verfahren der einzelnen Transporter sind diese vorzugsweise individuell und selbsttätig verfahrbar. Hierunter wird verstanden, dass jeder der Transporter, insbesondere die zweiten und/oder die ersten Transporter individuell ansteuerbar und individuell verfahrbar sind. Sie sind dabei insbesondere nach Art von Schlitten entlang der Schienen verfahrbar. Die einzelnen Transporter sind bevorzugt nicht (mechanisch) aneinander gekoppelt. Für diese individuelle Verfahrbarkeit sind die Transporter elektrisch oder magnetisch antreibbar. Sie weisen insbesondere jeweils eine eigene Antriebseinheit auf. Im Falle eines magnetischen Antriebs besteht diese Antriebseinheit im einfachsten Fall aus einem Permanentmagneten oder auch aus einem Elektromagneten. Entlang der Schienen sind dann Magnete verteilt, insbesondere Elektromagnete. Durch entsprechendes Umpolen wird dann ein fortlaufendes Magnetfeld erzeugt, welches die Transporter antreibt.

Für das Handling des Kabelsatzes in den unterschiedlichen Bearbeitungsstationen im zweiten Teil der Anlage sind in diesem zweiten Teil mehrere Manipulatoren bereitgestellt. Diese sind dabei an einer Vorderseite oder auch einer Rückseite der Bearbeitungsstationen, d.h. also an einer Vorderseite oder Rückseite der Gerüste entlang verfahrbar. Bei diesen Manipulatoren handelt es sich ― wie bereits zu der Steckerstation erläutert ― um Roboter, insbesondere um Industrieroboter, speziell um mehrachsige Gelenkarmroboter. Diese weisen typischerweise Verstellmöglichkeiten in mehreren Freiheitsgraden auf, insbesondere in mehreren linearen Freiheitsgraden sowie in mehreren rotatorischen Freiheitsgraden. Diese Manipulatoren sind dabei beispielsweise entlang einer Führungseinrichtung, wie beispielsweise Führungsschienen verfahrbar. Diese Führungseinrichtung ist wahlweise am Boden vor den einzelnen Gerüsten oder auch an der Decke angeordnet. Bevorzugt ist eine Deckenbefestigung vorgesehen, so dass also die Manipulatoren hängend an der Vorder- oder der Rückseite der einzelnen Gerüste in Läng- oder Erstreckungsrichtung der Anlage verfahrbar sind. Durch die Verwendung der Manipulatoren können auch komplexere Aufgaben an den jeweiligen Bearbeitungsstationen erfüllt werden. Zudem lassen sich die Manipulatoren auch individuell an unterschiedliche Bedürfnisse konfigurieren.

Zweckdienlicherweise ist dabei für jede Bearbeitungsstation, an der ein Manipulator benötigt wird, auch ein eigener, für diese Bearbeitungsstation konfigurierter Manipulator angeordnet. Hierdurch wird eine unabhängige Bearbeitung innerhalb der jeweiligen Bearbeitungsstation und damit eine hohe Taktrate erreicht.

In bevorzugter Weiterbildung ist die letzte zweite Bearbeitungsstation als eine Sammelstation ausgebildet, an der die zweiten Transporter gesammelt werden. Nach der Endfertigung des Kabelsatzes wird dieser beispielsweise an einer Verpackungsstation von den einzelnen zweiten Transportern entnommen. Diese sind daher wieder frei und werden zunächst an der Sammelstation gesammelt und dann von dort über die zuvor erwähnte gemeinsame Rückführschiene zurück zur Steckerstation transportiert. An der Sammelstation werden dabei insbesondere mehrere vertikal verfahrbare zweite Schienen angeordnet, die die in Vertikalrichtung verteilt angeordneten zweiten Transporter jeweils aufnehmen. Diese zweiten Schienen der Sammelstation werden dann auf die Höhe der gemeinsamen Rückführschiene geführt und dort werden die zweiten Transporter an die gemeinsame Rückführschiene übergeben.

Die Fixierstation weist allgemein Hilfsmittel auf, mit denen die einzelnen Leitungselemente aneinander fixiert werden. Die Fixierstation dient dabei insbesondere dazu, das Bündel der Leitungselemente mit einer ggf. bereichsweisen Umhüllung zu umgeben. Für die Fixierstation stehen grundsätzlich unterschiedliche Möglichkeiten zur Verfügung. Entsprechend weist die Fixierstation eine geeignete Bearbeitungseinheit auf. Insbesondere weist die Fixierstation dabei eine umhüllungseinheit, insbesondere eine Sprüheinheit, eine Bandierungseinheit, und/oder eine Gießeinheit auf. Je nach Anforderungen können dabei eine oder auch mehrere bzw. auch alle dieser vorgenannten Einheiten an der Fixierstation ausgebildet sein. Zweckdienlicherweise wird dabei eine jeweilige Bearbeitungseinheit an einem jeweiligen Manipulator gehalten und über diesen individuell an eine jeweilige erforderliche Bearbeitungsposition am Kabelsatz herangeführt. Die einzelnen an den Manipulatoren befestigten Bearbeitungseinheiten bilden daher Teilstationen der Fixierstation. Eine jeweilige Teilstation weist dabei bevorzugt ein eigenes Gerüst auf.

Die Umhüllungseinheit, speziell Sprüheinheit dient zum Aufbringen, speziell Aufsprühen eines Fixiermittels, über das die einzelnen Leitungselemente miteinander fixiert werden. Das Fixiermittel ist beispielsweise flüssig, aerosolartig und insbesondere als ein Kleber ausgebildet. Speziell ist die Sprüheinheit zum Aufsprühen eines insbesondere Fixiermittels ausgebildet, wie es beispielsweise in der WO 2016/026711 A1 beschrieben ist.

Die Bandierungseinheit dient allgemein zur Anbringung einer Bandierung und die Gießeinheit dient zum Anbringen einer Vergussmasse auf die zu verbindenden Leitungselemente. Zur Aufbringung der Bandierung kann beispielsweise eine Montagestation eingesetzt werden, wie sie aus der WO 2015/055753 A1 zu entnehmen ist.

Im Falle einer Gießeinheit sind speziell Formhälften ausgebildet, welche um das jeweilige zu umgießende Teilstück des Kabelsatzes mit den mehreren Leitungselementen gelegt wird und anschließend wird eine Gussmasse eingebracht. All dies erfolgt wiederum vollautomatisch speziell mit Hilfe der Manipulatoren.

Über die einzelnen Bearbeitungseinheiten werden vorzugsweise lediglich an lokalen Stellen des zu fertigenden Kabelsatzes die einzelnen Fixiermittel, also das aufgesprühte Fixiermittel, die Bandierung oder die Vergussmasse angebracht. Speziell werden diese Fixiermittel an Verzweigungspositionen angebracht, wo einzelne Leitungselemente abzweigen.

Der zweite Teil der Anlage weist ergänzend weiterhin zweckdienlicherweise eine Clipstation auf, die zur Befestigung von einzelnen Clips dient. Unter Clips werden hier allgemein Befestigungselemente verstanden, mit deren Hilfe der endgefertigte Kabelsatz an einer Trägerstruktur, beispielsweise der Kraftfahrzeug-Karosserie, fixiert oder befestigt werden. Diese werden dabei üblicherweise mit Hilfe einer Bandierung am Kabelsatz an gewünschten definierten Positionen befestigt. Als Bearbeitungseinheit weist die Clipstation vorzugsweise die aus der WO 2015/055753 A1 zu entnehmende Montagestation auf. Diese ist vorzugsweise wiederum an einem Manipulator befestigt.

Zweckdienlicherweise wird die Gesamtanlage noch um ein Warenlager, insbesondere Hochlager ergänzt, welches zur Bereitstellung von unterschiedlichen Spulen mit unterschiedlichen Typen von Einzelelementen ausgebildet ist.

Ausführungsbeispiele der Erfindung werden nachfolgend anhand der Figuren näher erläutert. Diese zeigen jeweils in teilweise vereinfachten Darstellungen:
- Fig. 1: eine Frontansicht einer Anlage zum automatisierten Herstellen eines Kabelsatzes mit einem ersten sowie einem zweiten Teil,
- Fig. 2: eine ausschnittsweise perspektivische Darstellung der Anlage im Bereich des ersten Teils zusammen mit einem Warenlager,
- Fig. 3: eine ausschnittsweise perspektivische Darstellung der Anlage im Bereich des zweiten Teils,
- Fig. 4A: eine vergrößerte ausschnittsweise Darstellung im Bereich einer Schneidstation mit integrierter Abisolierstation des ersten Teils mit einer ausschnittsweisen Darstellung eines ersten Transportsystems zur Handhabung von einzelnen Leitungselementen,
- Fig. 4B: eine vergrößerte ausschnittsweise Darstellung zur Erläuterung der Handhabung der einzelnen Leitungselemente mittels des ersten Transportsystems
- Fig. 5A ― 5C: Detailansichten im Bereich der Schneidstation zur Erläuterung eines automatisierten Ablängens der einzelnen Leitungselemente,
- Fig. 6: eine ausschnittsweise vergrößerte Darstellung im Bereich einer Abisolierstation zum Erläutern des automatischen Abisolierens der Leitungselemente,
- Fig. 7: eine vergrößerte ausschnittsweise Darstellung vorzugsweise eben`falls im Bereich der Abisolierstation zur Erläuterung des Anbringens eines (Dicht-) Schlauches auf das Leitungselement,
- Fig. 8: eine ausschnittsweise vergrößerte Darstellung im Bereich einer Kontaktierungsstation zur Erläuterung des Anbringens von Kontaktelementen an die abisolierten Leitungsenden,
- Fig. 9a ― 9D: verschiedene ausschnittsweise Darstellungen im Bereich einer Pufferstation, die zum Zwischenlagern der vorbereiteten Leitungselemente dient, zusammen mit dem zweiten Transportsystem zur Erläuterung des Transports sowie der Übergabe der einzelnen Leitungselemente an die Pufferstation,
- Fig. 10: eine ausschnittsweise Darstellung im Bereich einer Steckerstation des zweiten Teils der Anlage,
- Fig. 11: eine ausschnittsweise Ansicht im Bereich einer Verteilstation sowie einer daran angeschlossenen Fixierstation,
- Fig. 12: eine ausschnittsweise vergrößerte Darstellung einer speziell als Sprüheinheit ausgebildeten Umhüllungseinheit der Fixierstation zum Aufbringen eines Fixiermittels,
- Fig. 13: eine ausschnittsweise vergrößerte Darstellung einer Bandierungseinheit der Fixierstation zur Anbringung einer Bandierung,
- Fig. 14: eine ausschnittsweise vergrößerte Darstellung einer Gießeinheit der Fixierstation zum Anbringen einer Gussmasse auf die Leitungselemente,
- Fig. 15: eine ausschnittsweise vergrößerte Darstellung des zweiten Teils im Bereich einer Sammelstation,
- Fig. 16: eine Ansicht auf eine Rückseite im Bereich des Anfangs des zweiten Teils im Bereich der Steckerstation mit einem Manipulator zum Bestücken der zweiten Transporter mit Steckergehäusen.

In den Figuren sind gleich wirkenden Teile mit den gleichen Bezugszeichen versehen.

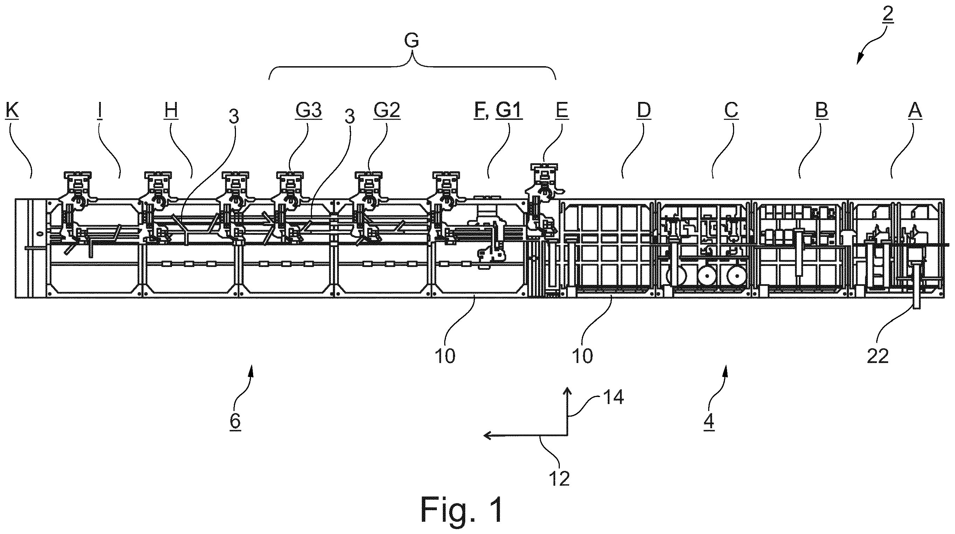

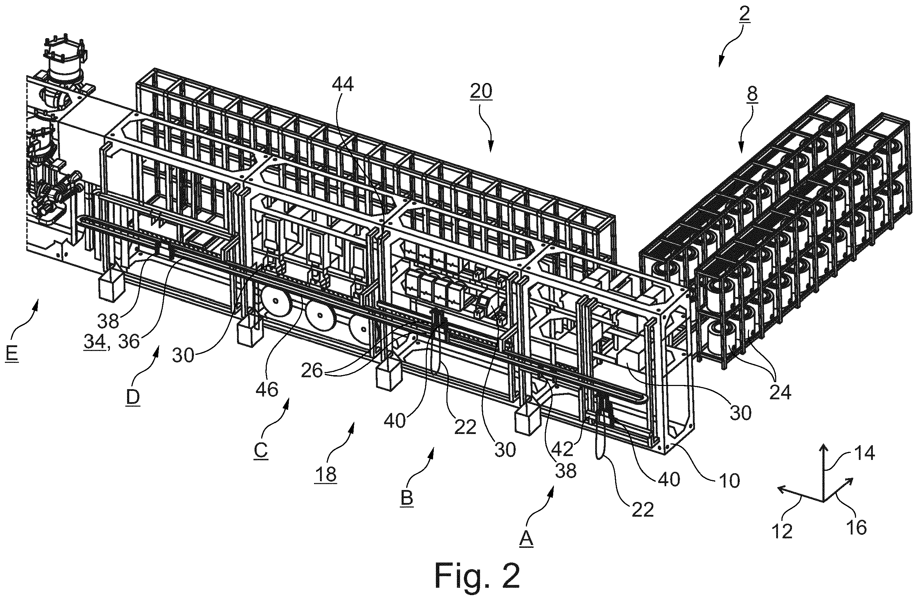

Die in den Figuren 1 bis 3 dargestellte Anlage 2 dient zum automatisierten Herstellen eines Kabelsatzes 3 und ist modular aus einer Vielzahl von einzelnen Bearbeitungsstationen aufgebaut. Die Anlage weist einen ersten Teil 4 mit ersten Bearbeitungsstationen A, B, C, D sowie einen zweiten Teil mit zweiten Bearbeitungsstationen E, F, G, H, I, K auf. Vor dem ersten Teil 4 ist noch ein Warenlager 8, welches nach Art eines Hochlagers ausgebildet ist, angeordnet. Die einzelnen Bearbeitungsstationen A bis K weisen jeweils ein Gerüst 10 auf, welches im Wesentlichen einen Gerüstrahmen definiert, innerhalb dessen im ersten Teil 4 Bearbeitungseinheiten zur Durchführung von unterschiedlichen Arbeitsschritten angeordnet sind. Die Gerüste 10 sind dabei unmittelbar aneinander angrenzend befestigt und bilden eine sich insbesondere linear erstreckende Gerüstanordnung. Die Gerüste 10 sind in einer Längsrichtung 12 aneinander angereiht. Die Gerüste 10 sind nach Art eines Regals aufgestellt. Sie erstrecken sich in die Höhe in einer Vertikalrichtung 14 und haben eine sich in eine Querrichtung 16 erstreckende Tiefe. Längsrichtung 12 und Vertikalrichtung 14 spannen eine Vertikalebene auf, zu der die Querrichtung 16 senkrecht orientiert ist. Im Ausführungsbeispiel ist das Warenlager 8 in Querrichtung 16 verlaufend angeordnet. Durch die Ausrichtung der Gerüste 10 in vertikaler Orientierung weist die gesamte Gerüstanordnung eine Vorderseite 18 sowie eine Rückseite 20 auf.

Bei der Fertigung des Kabelsatzes 3 wird die Anlage 2 in Längsrichtung 12 von der ersten Bearbeitungsstation A sukzessive bis zur letzten Bearbeitungsstation L durchlaufen. Im Ausführungsbeispiel der dargestellten modularen Anlage 2 sind dabei folgende Bearbeitungsstationen vorgesehen:
Eine Schneidstation A, eine Abisolierstation B, eine Kontaktierungsstation C, eine Pufferstation D. Der zweite Teil 6 beginnt mit einer Steckerstation E, gefolgt von einer Verteilstation F, einer mehrteiligen Fixierstation G, die im Ausführungsbeispiel drei Teilstationen G1, G2, G3 aufweist, weiter gefolgt von einer Clipstation H, einer Verpackungsstation I sowie einer End- oder Sammelstation K.

Im ersten Teil 4 der Anlage 2 werden zunächst Leitungselemente 22 aufbereitet. Bei diesen handelt es sich insbesondere um Adern oder auch um verdrillte Adern. Sie werden als Meterware über Spulen 24 bereitgestellt. Die Spulen 24 sind im Warenlager 8 bevorratet.

Im zweiten Teil 6 werden die einzelnen vorbereiteten Leitungselemente 22 zum Kabelsatz 3 zusammengestellt. All dies erfolgt vollautomatisiert ohne manuellen Eingriff. Die Leitungselemente 22 in den einzelnen Vorfertigungsstufen werden innerhalb des ersten Teils 4 mit Hilfe eines ersten Transportsystems 26 jeweils zwischen den einzelnen ersten Bearbeitungsstationen A bis D weitergefördert.

Im zweiten Teil 6, in dem die Zusammenstellung des Kabelsatzes 3 aus den einzelnen Leitungselementen 22 erfolgt, werden die jeweiligen Kabelsätze in ihren unterschiedlichen Vorfertigungsstufen mit Hilfe eines zweiten Transportsystems 28 sukzessive den einzelnen Bearbeitungsstationen E bis J des zweiten Teils 6 zugeführt.

Die einzelnen Bearbeitungsschritte im ersten Teil 4 werden mit Hilfe von Bearbeitungseinheiten 30 ausgeführt, die innerhalb des jeweiligen Gerüsts 10 der jeweiligen ersten Bearbeitungsstation A bis D angeordnet sind.

Im zweiten Teil 6 werden die einzelnen erforderlichen Arbeitsschritte durch Manipulatoren 32 durchgeführt, welche im Ausführungsbeispiel als mehrachsige Gelenkarmroboter ausgeführt sind. Hierbei ist jeder einzelnen Bearbeitungsstation E bis I jeweils ein eigener Manipulator 32 zugeordnet. Die einzelnen Manipulatoren 32 sind dabei in Längsrichtung 12 verfahrbar angeordnet. Im Ausführungsbeispiel sind sie hängend an einer hier nicht näher dargestellten Deckenschiene befestigt.

Wie nachfolgend noch näher beschrieben wird, wird zur Fertigung des Kabelsatzes 3 im zweiten Teil 6 der Kabelsatz 3 entsprechend einer gewünschten späteren verzweigten Struktur aufgespreizt. Der Kabelsatz 3 ist daher in einer zweidimensionalen Ebene aufgespreizt. Diese ist vertikal ausgerichtet, liegt also in der zuvor beschriebenen Vertikalebene. Die Kabelsätze 3 sind dabei an einer Frontseite des Gerüsts 10 angeordnet. Mittels der Manipulatoren 32 erfolgt die Bearbeitung daher an der Vorderseite 18 der Gerüste 10.

Bei der automatisierten Fertigung des Kabelsatzes 3 werden bei der im Ausführungsbeispiel dargestellten Anlage 2 folgende Fertigungsschritte sukzessive und automatisch durchlaufen:

### Warenlager

Im Warenlager 8 werden mehrere Spulen 24 bevorratet, auf denen Leitungselemente 22 unterschiedlicher Typen als Endlos-Ware aufgespult sind. Die einzelnen Typen der Leitungselemente 22 unterscheiden sich insbesondere im Hinblick auf ihre Querschnitte, insbesondere Querschnitte der Leiter, Farbe der Aderisolierung oder auch dadurch, ob es sich um eine Einzelader oder ein insbesondere verdrilltes Aderpaar handelt. Die noch nicht auf Länge abgeschnittenen Leitungselemente 22 werden beispielsweise unmittelbar von der im Warenlager 8 befindlichen Spule 24 abgewickelt und der Schneidstation A zugeführt. Alternativ besteht auch die Möglichkeit, eine jeweilige benötigte Spule 24 aus dem Warenlager 8 beispielsweise an die Rückseite 20 der Schneidstation A zu verbringen und erst von dort die Leitungselemente 22 abzuwickeln.

### A Schneidstation

Innerhalb der Schneidstation A werden die von den Spulen 24 abgewickelten Leitungselemente 22 unterschiedlichen Typs auf die jeweils für den zu fertigenden Kabelsatz 3 benötigte Länge abgelängt. Hierzu sind die in der Schneidstation A angeordneten Bearbeitungseinheiten 30 als handelsübliche Schneideinheiten ausgebildet.

### B Abisolierstation

In der Abisolierstation B werden anschließend mittels entsprechender AbisolierEinheiten als Bearbeitungseinheiten 30 Leitungsenden der Leitungselemente 22 abisoliert.

Ergänzend ist vorzugsweise weiterhin vorgesehen, dass im Bereich des abisolierten Leitungsendes zusätzlich noch ein Dichtschlauch angebracht wird. Dieser dient zur Abdichtung des jeweiligen Leitungselements 22 gegenüber einem Steckergehäuse.

### C Kontaktierungsstation

In der Kontaktierungsstation C werden Kontaktelemente, beispielsweise Kontaktbuchsen oder Kontaktstifte endseitig an den freigelegten Leitungsenden also am jeweiligen Leiter des Leitungselements 22 befestigt. Dies erfolgt beispielsweise durch einen Crimpprozess. Hierzu sind in der Kontaktierungsstation C als Bearbeitungseinheiten 30 entsprechende Kontaktierungseinheiten, insbesondere Crimpmaschinen angeordnet.

### D Pufferstation

Die zuvor vorbereiteten Leitungselemente 22 werden in der Pufferstation D gesammelt. In der Pufferstation D befinden sich daher nach Art eines Zwischenlagers eine Vielzahl von Leitungselementen 22, die sich im Hinblick auf ihren Typ und/oder ihre Länge unterscheiden.

### Erstes Transportsystem 26

Das erste Transportsystem 26 dient jeweils zum Transportieren der Leitungselemente 22 zwischen den einzelnen Bearbeitungsstationen A bis D. Es weist ein ersten Schienensystem 34 auf. Dieses umfasst dabei eine umlaufende Führungsschiene 36, auf der einzelne, individuell verfahrbare erste Transporter 38 angeordnet sind. Bei diesen ersten Transportern 38 handelt es sich um nach Art von Schlitten entlang der Führungsschiene 36 verfahrbaren Trägereinheiten. Diese sind jeweils zur insbesondere hängenden Aufnahme ein oder mehrere Leitungselemente ausgebildet. Unter hängende Aufnahme wird hierbei verstanden, dass mittels des ersten Transportsystems 26 die Leitungselemente 22 hängend zwischen den einzelnen Arbeitsstationen A bis D verfahren werden. Die Übergabe von bzw. an eine jeweilige Bearbeitungsstation A bis D zu diesen ersten Transportern 38 erfolgt mit Hilfe von Positioniereinheiten 40. Jeder Bearbeitungsstation A bis D ist zumindest eine Positioniereinheit 40 zugeordnet. Die Positioniereinheit 40 ist wiederum in Längsrichtung 12 an der Vorderseite 18 des jeweiligen Gerüsts 10 verfahrbar angeordnet. Der Positioniereinheit 40 weist typischerweise mehrere Bewegungsfreiheitsgrade auf, derart, dass die hängend von den ersten Transportern 38 bereitgestellten Leitungselemente 22 gegriffen und den einzelnen Bearbeitungseinheiten 30 zugeführt werden. Üblicherweise erfolgt die eigentliche Bearbeitung der Leitungselemente 22 dabei in horizontaler Richtung. Die Leitungselemente 22 werden beispielsweise den Bearbeitungseinheiten 30 zum Abisolieren oder Kontaktieren in Querrichtung 16 zugeführt. Die Positioniereinheit 40 ist allgemein derart ausgebildet, dass sie insbesondere die Leitungsenden der Leitungselemente 22 greift und aus einer Orientierung in Vertikalrichtung 14 in eine Orientierung in Querrichtung 16 überführt und den Bearbeitungseinheiten 30 zuführt. Nach Durchführung des jeweiligen Bearbeitungsschrittes übergibt die Positioniereinheit 40 das bearbeitete Leitungselement 22 wieder einem jeweiligen ersten Transporter 38, so dass das Leitungselement 22 an diesem wieder hängend angeordnet zur nachfolgenden Bearbeitungsstation verfahren wird.

Die einzelnen ersten Transporter 38 sind dabei jeweils individuell verfahrbar und ansteuerbar. Speziell werden sie über einen Magnetantrieb angetrieben, wobei hierzu vorzugsweise an der Führungsschiene 36 eine Vielzahl von Elektromagneten angeordnet sind, gleichzeitig der erste Transporter 38 speziell Permanentmagnete aufweist und durch ein wechselndes Umpolen der Elektromagnete in der Führungsschiene 36 ein wanderndes Magnetfeld zum Vortrieb der ersten Transporter 38 erzeugt wird.

Die ersten Transporter 38 werden am Ende des ersten Teils 4, also nach Übergabe der Leitungselemente 22 an die Pufferstation D, wieder auf einen vorderen Schienenteil der umlaufenden Führungsschiene 36 zurückgeführt. Das gesamte erste Schienensystem 34 ist an der Vorderseite 18 der Gerüste 10 angebracht. Die Führungsschiene 36 verläuft in Längsrichtung 12 und ist horizontal ausgerichtet. Die Positioniereinheit 40 ist zweckdienlicherweise ebenfalls jeweils an einer Querschiene 42 verfahrbar angeordnet. Hierdurch kann die Positioniereinheit 40 innerhalb der jeweiligen Bearbeitungsstation A bis D in Längsrichtung 12 verfahren werden. Ergänzend ist auch eine vertikale Verfahrbarkeit der Positioniereinheit 40 vorgesehen. Hierzu ist im Ausführungsbeispiel die jeweilige Querschiene 42 selbst entlang von seitlichen Vertikalschienen 44 in Vertikalrichtung 14 verfahrbar. Hierdurch ist ermöglicht, dass innerhalb eines jeweiligen Gerüsts 10 mehrere Bearbeitungseinheiten 30 verteilt sowohl über die Länge als auch die Höhe angeordnet sind, die jeweils individuell über die Positioniereinheit 40 anfahrbar sind. Auch für die Positioniereinheit 40 ist bevorzugt ein individueller Antrieb vorgesehen, der vorzugsweise ebenfalls wie bei den ersten Transportern 38 auf elektromagnetischem Weg erfolgt.

Das erste Schienensystem 34 setzt sich allgemein aus einer Vielzahl von ersten Schienen 46 zusammen. Speziell wird die umlaufende Führungsschiene 36 aus mehreren dieser ersten Schienen 46 (zzgl. von Umlenkelementen) gebildet. Eine jeweilige erste Schiene 46 ist dabei einem jeweiligen Gerüst 10 zugeordnet und weist insbesondere dessen Länge auf. Das erste Schienensystem 34 ist daher korrespondierend zu der Gerüstanordnung ebenfalls modular aufgebaut. Die ersten Schienen 46 benachbarter Bearbeitungsstationen fluchten miteinander zur Ausbildung der umlaufenden Führungsschiene.

### E Steckerstation

In der Steckerstation E werden zweite Transporter 48 des zweiten Transportsystems 28 mit den Leitungselementen 22 bestückt. Zumindest ein Teil der zweiten Transporter 48 ist hierzu mit Steckergehäusen bestückt. In diese werden die an den Leitungsenden der Leitungselemente 22 angeschlagenen Kontaktelemente eingelegt. Einige der zweiten Transporter 48 können auch mit Halter zur Aufnahme von miteinander verbundenen Leitungsenden zweier Leitungselemente 22 versehen oder bestückt sein. Schließlich sind einige der zweiten Transporter zum Führen oder Umlenken von Leitungselementen 22 ausgebildet bzw. mit entsprechenden Umlenkelementen oder Haltern bestückt.

In einigen Fällen ist es erforderlich, dass zwei Leitungsenden unmittelbar miteinander verbunden werden um somit die beiden Leitungselemente 22 auf gleiches Potential zu bringen. Dies erfolgt typischerweise durch ein stoffflüssiges Verbinden der beiden Leitungsenden. Hierzu ist ― beispielsweise in der Steckerstation E integriert ― eine entsprechende Verbindungseinheit als Bearbeitungseinheit angeordnet (nicht näher dargestellt). Beispielsweise werden mit Hilfe des Manipulators 32 die zu verbindenden Leitungsenden in eine Schweißeinheit (Ultraschallschweißen) eingefügt. Anschließend erfolgt vorzugsweise noch eine Isolierung dieser stoffflüssig miteinander verbundenen Leitungsenden, beispielsweise indem ein Schrumpfschlauch aufgeschrumpft wird oder indem anderweitig ein Isoliermaterial beispielsweise durch Aufsprühen etc. aufgebracht wird. Diese stoffflüssig miteinander verbundenen Leitungsenden werden dann in der Steckerstation E ebenfalls in die erwähnten Halter an den zweiten Transportern 48 eingebracht.

Von besonderer Bedeutung innerhalb der Steckerstation E ist weiterhin, dass die zweiten Transporter 48 auf mehrere zweite Schienen 50 des zweiten Transportsystems 28 verteilt werden. Die zweiten Schienen 50 sind dabei parallel zueinander angeordnet. Die einzelnen Leitungsenden der Leitungselemente 22 werden in geeigneter Weise an jeweils einem zweiten Transporter 48 fixiert, die verteilt über die zweiten Schienen 50 angeordnet sind. Es werden dabei in der Steckerstation E sämtliche für den zu fertigenden Kabelsatz 3 benötigten Leitungselemente 22 aus der Pufferstation D entnommen und an die zweiten Transporter 48 befestigt. Dies erfolgt mit Hilfe des der Steckerstation E zugeordneten Manipulators 32.

Bei der Steckerstation E handelt es sich um eine vergleichsweise schmale Station. An dieser sind die zweiten Transporter 48 vorzugsweise jeweils eng beieinander angeordnet. Die parallel zueinander angeordneten zweiten Schienen 50 sind vorzugsweise unmittelbar nebeneinander angeordnet.

### F Verteilstation

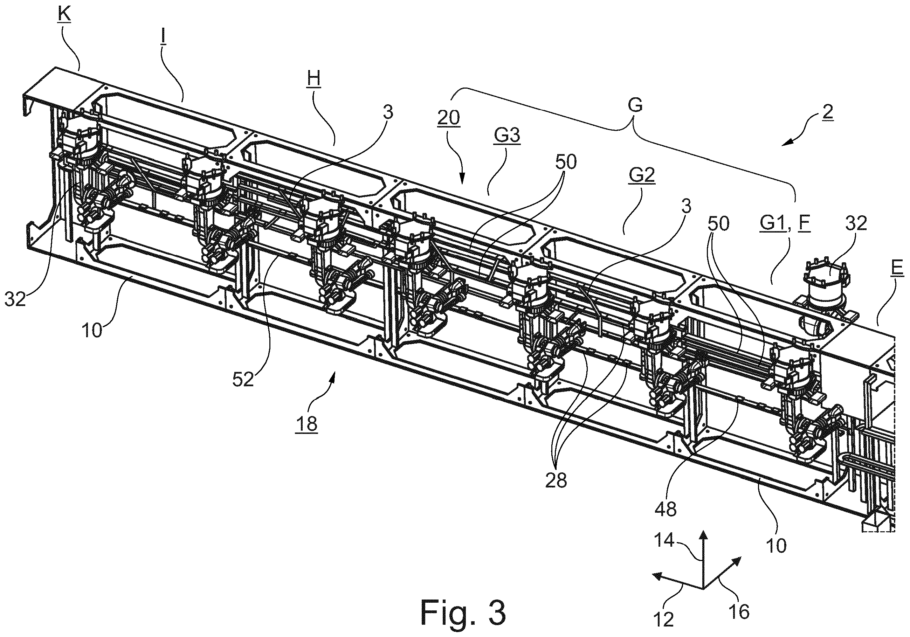

Die mit den Leitungselementen 22 bestückten zweiten Transporter 48 werden auf weitere zweite Schienen 50 in der Verteilstation F überführt. In der Verteilstation F erfolgt ein Verteilen der zweiten Transporter 48 und damit der Leitungsenden der Leitungselemente 22 in die durch den Kabelsatz 3 vorgegebene verzweigte Struktur. Die einzelnen zweiten Transporter 48 nehmen daher innerhalb der Vertikalebene eine Verteilstruktur entsprechend der verzweigten Struktur des Kabelsatzes 3 ein. Hierzu werden die zweiten Transporter 48 auf ihrer jeweiligen zweiten Schiene 50 in Längsrichtung 12 an eine vordefinierte Position verfahren. Gleichzeitig werden die parallel zueinander angeordneten zweiten Schienen 50 in Vertikalrichtung 14 auseinandergezogen, so dass sich die gewünschte verzweigte Struktur ergibt. Bei der Darstellung der Fig. 3 ist noch eine Zwischensituation dargestellt, bei der innerhalb der Verteilstation F noch nicht die vollständige Verteilerstruktur eingenommen ist. Die Verteilerstruktur ist an den nachfolgenden Bearbeitungsstationen zu erkennen.

Das Aufspreizen der zweiten Schienen 50 sowie das Verfahren der zweiten Transporter 48 in Längsrichtung an ihre vorgegebene Längsposition braucht nicht zwingend in der Verteilstation F abgeschlossen zu sein. Dies kann beispielsweise auch noch zumindest teilweise in der nachfolgenden Fixierstation G erfolgen.

### G Fixierstation

In der Fixierstation G werden die einzelnen Leitungselemente aneinander fixiert, speziell um die vorgegebene verzweigte Struktur zu fixieren, also eine gewisse Stabilität zu verleihen. Hierzu sind zweckdienlicherweise mehrere Teilstationen G1, G2, G3 vorgesehen, die beispielsweise für unterschiedliche Fixermethoden ausgebildet sind. So können je nach Bedarf die unterschiedlichen Fixiermethoden für einen jeweiligen Kabelsatz 3 verwendet werden. Beispielsweise ist eine erste Fixierstation G1 zum Aufsprühen eines insbesondere textilen Fixiermittels, eine zweite Fixierstation G2 zum Aufbringen einer Bandierung und eine dritte Fixierstaion G3 zum Anbringen einer Vergussmasse ausgebildet.

Für diese verschiedenen Varianten sind den Bearbeitungsstationen G1, G2, G3 jeweils eigene Manipulatoren 32 angeordnet, die mit entsprechenden Handhabungseinheiten ausgerüstet sind.

Wie anhand der Figen 1, 3 zu erkennen ist sind die Verteilstation F sowie die erste Fixierstation G1 miteinander kombiniert, teilen sich daher gemeinsam ein Gerüst 10.

### H Clipstation

In der Clipstation werden bei Bedarf (Befestigungs-) Clips angebracht. Diese werden typischerweise mittels einer Bandierung am Kabelsatz 3 befestigt. Auch hierzu ist an dem jeweiligen Manipulator 32 eine geeignete Clipsetz-Einheit angebracht.

### I Verpackungsstation

Die Verpackungsstation I dient zur Entnahme des endgefertigten Kabelsatzes 3 und zum Weitertransport desselben. Hierzu wird der Kabelsatz 3 mit Hilfe des zugeordneten Manipulators 32 von den zweiten Schienen 50 genommen. Für den Weitertransport stehen unterschiedliche Möglichkeiten zur Verfügung, beispielsweise eine einfache Ablage auf einem Tisch, auf einem Förderband, etc. Alternativ das Einlegen der Kabelsätze 3 in Transportbehälter. Grundsätzlich besteht auch die Möglichkeit, dass für einen kompakten Transport die Kabelsätze 3 zusammengefaltet werden.

### K Sammelstation

In der Sammelstation K werden die einzelnen zweiten Transporter 48 gesammelt und einer gemeinsamen Rückführschiene 52 zugeführt. Diese verläuft an der Rückseite 20 und erstreckt sich bis zur Steckerstation E. An dieser werden die zweiten Transporter 48 mit Hilfe eines an der Rückseite 20 angeordneten Manipulators 32 wieder in geeigneter Weise mit Steckergehäusen bestückt und somit für die Fertigung des nächsten Kabelsatzes 3 vorbereitet.

### Zweites Transportsystem 28

Das zweite Transportsystem 28 weist die zuvor beschriebenen zweiten Schienen 50 und die zweiten Transporter 48 auf. Die zweiten Transporter 48 sind vergleichbar wie die ersten Transporter 38 nach Art von entlang der Schienen 50 verfahrbaren Schlitten angeordnet. Die einzelnen zweiten Transporter 48 sind individuell verfahrbar und weisen vorzugsweise ebenfalls wie die ersten Transporter 38 ein elektromagnetisches Antriebssystem auf. Die zweiten Schienen 50 sind jeweils in Vertikalrichtung 40 verfahrbar. Jede Bearbeitungsstation E bis I weist dabei eine Anzahl von zweiten Schienen 50 auf, die parallel zueinander angeordnet sind. Die zweiten Schienen 50 erstrecken sich jeweils lediglich über die Länge eines jeweiligen Gerüsts 10 einer jeweiligen Bearbeitungsstation E bis I. Zur Übergabe der zweiten Transporter 48 zwischen benachbarten Bearbeitungsstationen werden die zweiten Schienen 50 in eine fluchtende Anordnung gebracht.

Weiterhin umfasst das zweite Transportsystem 28 die gemeinsame Rückführschiene 52, die an der Rückseite 20 entlang verläuft.

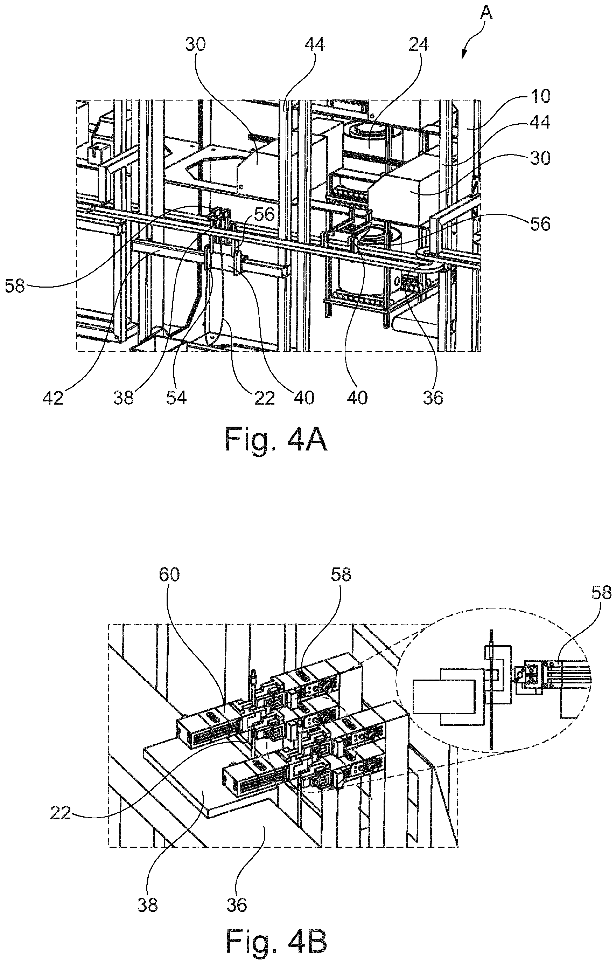

Die einzelnen Bearbeitungsschritte an den einzelnen Bearbeitungsstationen A bis K werden nachfolgend anhand der Figuren 4 bis 15 näher erläutert.

In der Fig. 4A ist eine vergrößerte Ansicht auf die Vorderseite 18 dargestellt und zwar insbesondere im Bereich der Schneidstation A. Zu erkennen ist der Blick in das Innere des Gerüstes 10, wo mehrere Bearbeitungseinheiten 30 beispielhaft dargestellt sind. Im Hintergrund sind weiterhin noch die Spulen 24 des Warenlagers 8 zu erkennen. Anhand der Figuren 4A sowie 4B wird der Übergabemechanismus zur Übergabe der Leitungselemente 22 an die jeweilige Bearbeitungsstation vom ersten Transporter 38 mit Hilfe der Positioniereinheit 40 erläutert.

In der Fig. 4A ist zunächst die umlaufende Führungsschiene 36 zu erkennen. Diese verläuft vor dem Gerüst 10. Zwischen der Führungsschiene 36 und dem Gerüst 10 ist zusätzlich noch die Querschiene 42 angeordnet, welche längs verschieblich an den Vertikalschienen 44 befestigt ist.

Die Positioniereinheit 40 weist eine an der Querschiene 42 geführte Basis 54 auf, an der im Ausführungsbeispiel ein um eine parallel zur Längsrichtung 12 orientierte horizontale Achse schwenkbarer Schwenkwarm 56 befestigt ist. An diesem wiederum ist ein Positioniergreifer 58, im Ausführungsbeispiel sind zwei Positioniergreifer 58 angeordnet, die zum Greifen jeweils eines Leitungselements 22 ausgebildet sind.

An dem ersten Transporter 38 sind ― im gleichen Abstand wie die Positioniergreifer 58 zueinander ― ebenfalls zwei Greifer 60 angeordnet, die ebenfalls zum Halten der Leitungselemente 22 ausgebildet sind. Wie insbesondere aus der Fig. 4B zu erkennen ist, wird das jeweilige Leitungselement 22 im ersten Transporter 38 hängend gehalten, wobei die beiden Greifer 60 die beiden Leitungsenden des Leitungselements 22 greifen, so dass dieses einen U-förmigen Bogen ausbildet. Die Übergabesituation ist beispielhaft in Fig. 4B dargestellt. Das jeweilige Leitungsende steht ein gewisses Stück über den Greifer 60 über. Mittels des jeweiligen Positioniergreifers 58, welcher an seinem vorderen Ende bevorzugt nach Art eines U-Bügels oder C-Bügels ausgebildet ist (vgl. hierzu vergrößerte Schemadarstellung in Fig. 4B) wird dann ein Teil des Leitungselements 22 oberhalb und unterhalb des Greifers 60 gegriffen. Das Greifen erfolgt hierbei insbesondere durch beispielsweise geeignet ausgebildete Klemmbacken die beispielsweise über Stellantriebe (z.B. elektrisch) betrieben werden. Nach der Aufnahme des Leitungselements 22 in die Positioniergreifer 58 verfährt die Positioniereinheit 40 zu der gewünschten Bearbeitungseinheit 30. Hierzu kann die Positioniereinheit 40 sowohl in Vertikalrichtung 14 als auch in Längsrichtung 12 verfahren werden. Zum Überführen der Enden des Leitungselements 22 in die jeweilige Bearbeitungseinheit 30 erfolgt ein Verschwenken des Schwenkarms 56 etwa um 90°, so dass die Leitungsenden aus ihrer vertikalen Orientierung in eine horizontale Orientierung überführt werden.

Wie aus der Fig. 4A sowie aus der Fig. 4B zu erkennen ist, sind die Positioniergreifer 58 jeweils in etwa L-förmig ausgebildet. Der eine L-Schenkel ist dabei am Schwenkarm 56 befestigt. Zweckdienlicherweise ist dieser L-Schenkel in seiner Längsrichtung vorzugsweise nach Art eines Teleskops ausfahrbar. Hierdurch kann also eine Zustellbewegung z.B. in Querrichtung 16 vorgenommen werden, wenn der Schwenkarm 56 in die Horizontalebene verschwenkt ist. Hierdurch besteht die Möglichkeit, die vom Positioniergreifer 58 gegriffenen Leitungsenden in Querrichtung 16 in die jeweilige Bearbeitungseinheit 30 einzuführen.

Ein jeweiliger Positioniergreifer 58 und/ oder ein jeweiliger Greifer 60 ist / sind vorzugsweise zum Greifen sowohl einer einzelnen Ader als auch zum getrennten Greifen von zwei Adern eines Adernpaares ausgebildet.

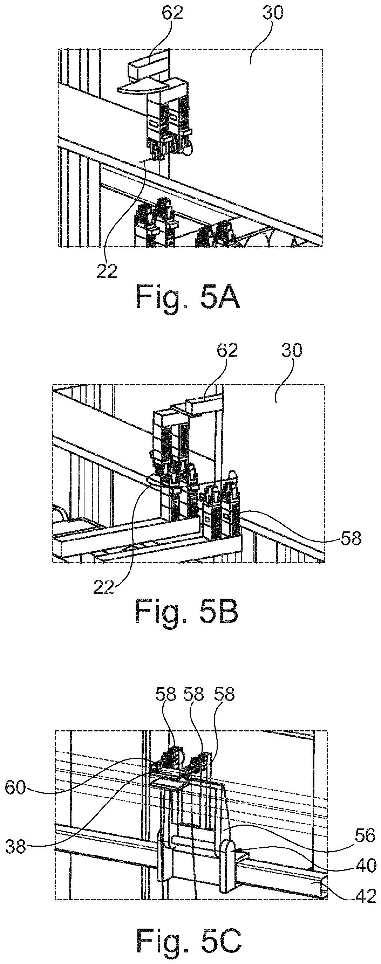

Anhand der Figuren 5A bis 5C wird das Ablängen der Leitungselemente 22 in der Schneidstation A erläutert:
Die Bearbeitungseinheit 30 weist ebenfalls ein Greifelement 62 zum Greifen eines Leitungsendes des noch nicht abgelängten Leitungselements 22 auf. Dieses Leitungsende steht aus einer Schneidstation hervor und wird von dem Greifelement 62 gegriffen und durch Herausziehen von der hier nicht näher zu erkennenden Spule 24 abgezogen. Das Greifelement 62 ist, wie durch Vergleich der Fig. 5A und 5B zu erkennen ist, um eine Vertikalachse um 180° verschwenkbar. Das Leitungsende wird gegriffen, anschließend wird das Greifelement 62 um 180° um die Vertikalachse gedreht, anschließend erfolgt eine Übergabe an den an dieser Position befindlichen (linken) Positioniergreifer 58 der Positioniereinheit 40. Durch das Verschwenken um 180° wird das Leitungsende entlang eines Kreisbogens geführt, wobei der Durchmesser dieses Kreisbogens dem Abstand zwischen den Positioniergreifern 58 entspricht. Durch diese Maßnahme kann daher die Übergabe vom Greifelement 62 an den linken Positioniergreifer 58 erfolgen. Gleichzeitig kann nach Ablängen des Leitungselements 22 das dann zweite Leitungsende unmittelbar von dem rechten Positioniergreifer 58 gegriffen werden, ohne dass ein zusätzliches Verfahren erforderlich ist. Zum Bereitstellen der richtigen Länge für das Leitungselement 22 ist beispielsweise in der Schneidstation 30 ein Förderelement zum Herausschieben des Leitungselements 22 enthalten.

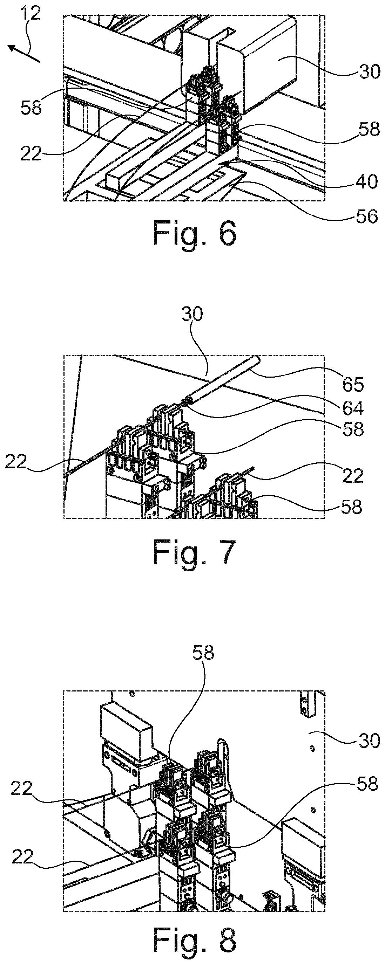

Fig. 6 zeigt eine Situation beim Abisolieren der Leitungsenden. Zu erkennen ist wiederum die Positioniereinheit 40 mit den beiden Positioniergreifern 58, die das Leitungselement 22 an den beiden Enden halten. Die Bearbeitungseinheit 30 ist hier als Abisoliereinheit ausgebildet. Der Schwenkarm 56 ist wieder in die Horizontalebene verschwenkt. Mittels zunächst des linken Positioniergreifers 58 und durch eine lineare Zustellbewegung des L-Schenkels wird das Leitungsende in die Abisoliereinheit 30 eingefügt, dort abisoliert und anschließend wieder zurückgezogen. Anschließend erfolgt das gleiche Vorgehen mit Hilfe des rechten Positioniergreifers 58. Die Positioniereinheit 40 verfährt hierzu ein Stück in Längsrichtung 12, so dass das zweite Leitungsende in definierter Position relativ zur Schneideinheit 30 orientiert ist.

Nach dem Abisolieren wird zusätzlich noch im Anschluss an das abisolierte Leitungsende eine Dichtung 64 angebracht, wie dies in der Fig. 7 dargestellt ist. Die Dichtung ist nach Art eines O-Rings oder Hülse ausgebildet. Das Prinzip ist wiederum ähnlich wie beim Abisolieren bei der Fig. 6. Es erfolgt wieder ein Einfügen der Leitungsenden mittels der linearen Stellbewegung der Positioniergreifer 58. Auf Seiten der Bearbeitungseinheit 30 werden die Dichtungen 64 jeweils in einem Röhrchen 65 an einer definierten Position bereitgestellt und gehalten. Das Röhrchen 65 bildet eine Zuführung für das Dichtelement 64. Das Leitungsende wird in das Röhrchen 65 eingeschoben und dabei wird das Dichtelement 64 auf das Leitungsende aufgeschoben.

Als nächstes erfolgt in der Kontaktierungsstation C das Anbringen eines in der Fig. 8 nicht zu erkennenden Kontaktelements. Die Bearbeitungseinheit 30 ist in diesem Fall beispielsweise als Crimpeinheit ausgebildet, welche Crimpkontakte zur Verfügung stellt. Das abisolierte Leitungsende wird wiederum mit Hilfe des Positioniergreifers 58 in die Bearbeitungseinheit 30 eingeführt, dort erfolgt der Crimpprozess bzw. das Befestigen des Kontaktelements.

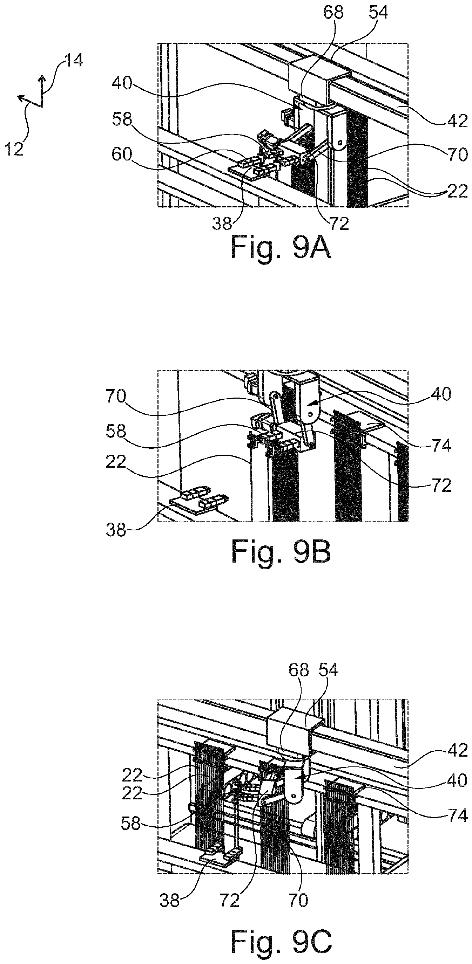

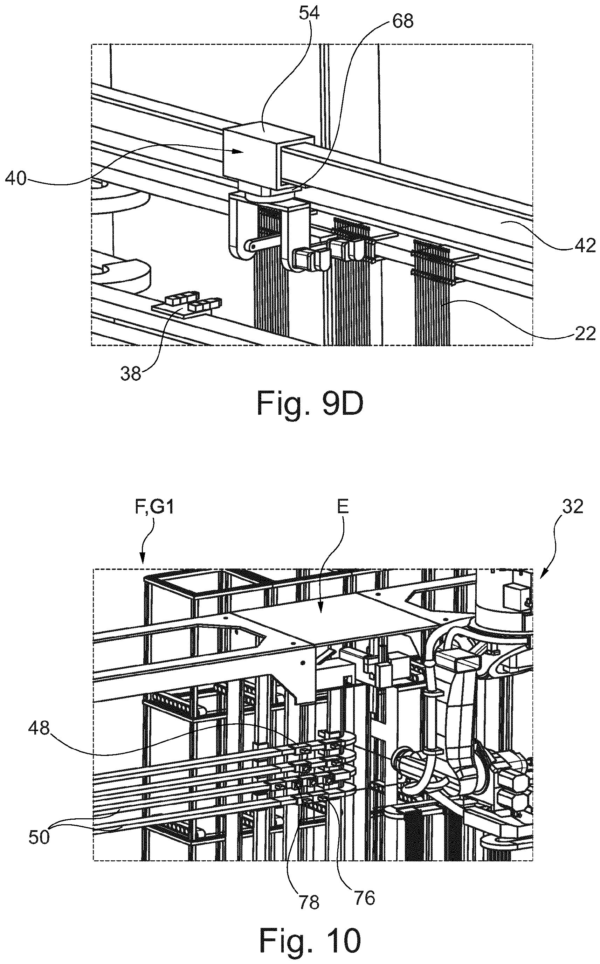

Nach dem Anbringen der Kontaktelemente ist das Leitungselement 22 für die Fertigung des Kabelsatzes 3 vorbereitet und wird in die Pufferstation D gebracht. Diese Situation ist in den Figuren 9A bis 9D beispielshaft dargestellt. An der Pufferstation D ist wiederum eine Positioniereinheit 40 angeordnet, die wiederum in Längsrichtung 12 sowie in Vertikalrichtung 14 verfahrbar ist. Sie ist wiederum an der Querschiene 42 querverschieblich mittels individuellem Antrieb verschiebbar. Die Querschiene 42 ist entlang seitlicher Vertikalschienen 44 in Vertikalrichtung verfahrbar. Die Positioniereinheit 40 in der Pufferstation D weist wiederum vorzugsweise zwei Positioniergreifer 58 auf, die die Leitungsenden des Leitungselements 22 greifen. Die Übergabe von den entsprechenden Greifern 60 des ersten Transporters 38 ist in der Fig. 9A dargestellt. Die Positioniereinheit 40 weist in der Ausführungsvariante gemäß den Figuren 9A bis 9D eine schlittenartige Basis 54 auf, an der ein Drehhalter 68 um eine Vertikalachse drehbar angeordnet ist. Der Drehhalter 68 ist im Ausführungsbeispiel U-förmig ausgebildet und weist zwei U-Schenkel aus. Allgemein sind am Drehhalter 68 Schwenkhebel 70 um eine Längsachse schwenkbar angeordnet, die Schwenkhebel 70 wiederum tragen an ihrem anderen Ende einen Grundkörper 72, an dem die beiden Positioniergreifer 58 befestigt sind. Der Grundkörper 72 ist dabei wiederum schwenkbeweglich an den Schwenkhebeln 70 befestigt. Durch ein Verschwenken der Schwenkhebel 70 erfolgt eine Zustellbewegung zum ersten Transporter 38 hin bzw. von diesem weg. Der Drehhalter 68 kann sich zumindest um 180° drehen. Nach Aufnahme des Leitungselements 22 wird dieses durch eine 180°-Drehung vom ersten Transporter 38 mittels der Positioniereinheit 40 an einen Sammelhalter 74 übergeben.

Von der Pufferstation D werden die einzelnen Leitungselemente 22 mit Hilfe des Manipulators 32 der Steckerstation E gegriffen und die Leitungsenden eines Leitungselementes 22 an zwei getrennte zweite Transporter 48 befestigt.

Bevorzugt sind die zweiten Transporter 48 hierbei mit geeigneten Steckergehäusen 76 bestückt. Die Leitungsenden werden in diese Steckergehäuse 76 prozesssicher eingesetzt. Beispielsweise ist hierzu beim Einschieben auch eine geeignete Positions- und/oder Kraftüberwachung vorgesehen, um ein prozesssicheres, zuverlässiges Bestücken des Steckergehäuses 76 mit den Leitungsenden der Leitungselemente 22 zu gewährleisten und damit mit der lagegenauen Anordnung der Kontaktelemente. Innerhalb der Steckerstation E werden sukzessive alle für den Kabelsatz 3 erforderlichen Leitungselemente 22 aus der Pufferstation D genommen und mit ihren Leitungsenden jeweils in das Steckergehäuse 76 eingesteckt. Weiterhin ist ein Teil der zweiten Transporter 48 beispielsweise mit Umlenkelementen 78 bestückt und zumindest einige der Leitungselemente 22 werden an definierten Längenpositionen an diesen Umlenkelementen 78 fixiert.

Die einzelnen zweiten Schienen 50 sind dabei eng beieinander angeordnet.

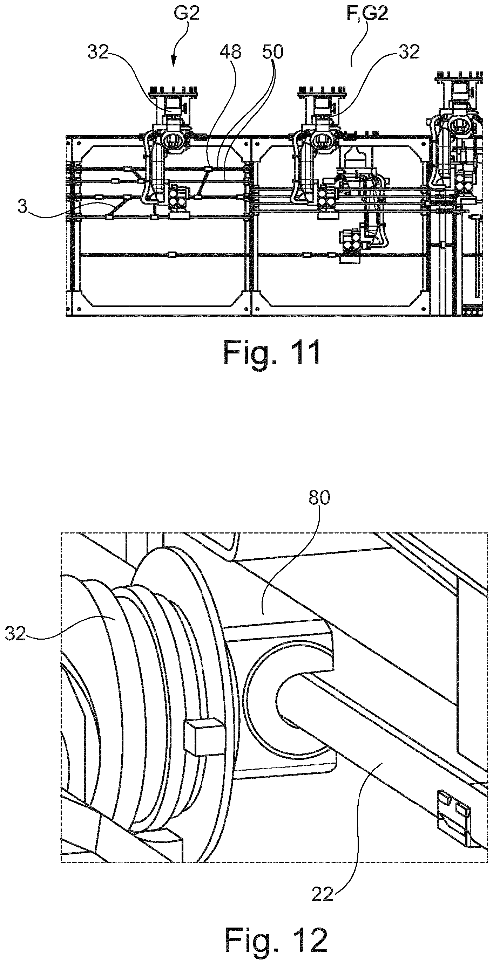

Aus der Steckerstation E werden dann die zweiten Transporter 48 mit den daran gehaltenen Leitungselementen 22 an die nachfolgende Bearbeitungsstation, insbesondere die Verteilerstation F überreicht. Die einzelnen zweiten Transporter 48 verfahren dann an unterschiedliche Längenpositionen auf ihrer jeweiligen zweiten Schiene 50. Ergänzend werden die zweiten Schienen 50 innerhalb der Verteilstation F auseinandergezogen, so dass sich durch diese Maßnahme insgesamt die zweiten Transporter 48 entsprechend einer vorgegebenen Verteilstruktur an unterschiedliche Positionen innerhalb einer Vertikalebene verteilt angeordnet werden. Dies ist insbesondere beispielsweise aus der linken Bildhälfte der Fig. 11 zu entnehmen. Diese linke Bildhälfte zeigt dabei eine Teilstation der Fixierstation G. Im Ausführungsbeispiel werden bei der Verteilstation F bereits zwei Schritte parallel ergriffen, nämlich zum einen das Verteilen und Überführen der zweiten Transporter in die Verteilstruktur. Parallel hierzu erfolgt bereits auch gleich ein erstes Fixieren. Das heißt eine Teilstation G1 der Fixierstation G ist kombiniert mit der Verteilstation F. Das Fixieren erfolgt dabei mittels des Manipulators 32.

Die Figuren 12, 13, 14 zeigen jeweils ausschnittsweise Darstellungen im Bereich der Teilstationen G1, G2, G3 der Fixierstation G. Und zwar zeigt die Fig. 12 eine als Sprüheinheit 80 ausgebildete Umhüllungseinheit zum Aufbringen eines Fixiermittels, wie dies beispielsweise in der WO 2016/026711 A1 beschrieben ist. Beispielsweise wird ein andere Kleber aufgebracht, insbesondere aufgesprüht werden. Das Aufbringen kann auch anderweitig beispielsweise durch Tauchen erfolgen.

Hierzu ist an einer Roboterhand des Manipulators 32 die Sprüheinheit 80 angeordnet, welche die zusammengefassten Leitungselemente 22 beispielsweise C-förmig umschließt und an diese radial herangefahren werden kann. Innerhalb der Sprüheinheit 80 sind einzelne Sprühköpfe enthalten, über die das Fixiermittel aufgesprüht wird.

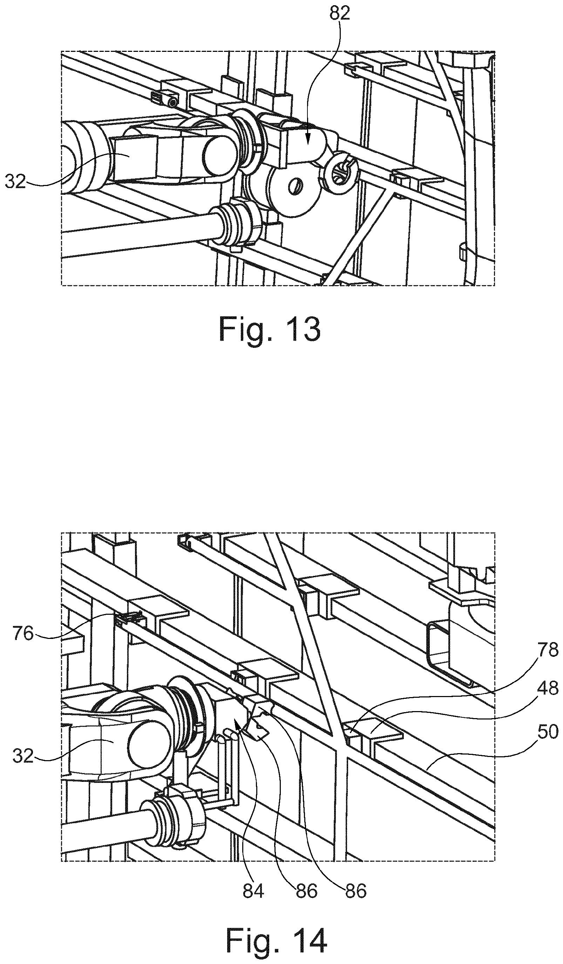

Fig. 13 zeigt eine Bandierungseinheit 82, mittels der eine Bandierung angebracht wird. Speziell wird die Bandierung vorliegend zur Befestigung von hier nicht näher dargestellten Clips am Leitungsbündel angebracht. Die Clips sind insbesondere als Befestigungselemente ausgebildet, über die der endgefertigte Kabelsatz 3 später an Komponenten, beispielsweise im Fahrzeug befestigt wird. Das Bandierungsmaterial ist beispielsweise auf einer Spule bevorratet und wird von dieser mittels eines Bandierungskopfes um die miteinander zu verbindenden Leitungselemente 22 gewickelt. Der Bandierungskopf ist wiederum in etwa C-förmig ausgebildet, so dass dieser seitlich über das Leitungsbündel geführt werden kann. Bevorzugt werden gleichzeitig auch die zu Befestigenden Clips automatisch zugeführt. Der Bandierungskopf ist insbesondere identisch zu oder in Anlehnung an die aus der WO 2015/055753 A1 zu entnehmende Montageeinheit ausgebildet.

Fig. 14 zeigt eine Gießeinheit 84, die wiederum an der Roboterhand des Manipulators 32 angeordnet ist. Die Gießeinheit 84 weist zwei Formhälften 86 auf, die aufklappbar ausgebildet sind, so dass sie über das Leitungsbündel gebracht werden können. Nach Schließen der beiden Formhälften 86 wird eine vorzugsweise schnell aushärtende Gießmasse in die Form 56 eingebracht. Die Gussmasse wird dabei über ein Versorgungssystem den Formhälften 86 zugeführt.

Speziell in der Fig. 14 sind die zweiten Transporter 48 gut zu erkennen, insbesondere zusammen mit den Umlenkelementen 78 oder auch den Steckergehäusen 76. Die Umlenkelemente 78 sind insbesondere im Bereich von Abzweigungen angeordnet, bei denen also zumindest ein Leitungselement 22 von dem verbleibenden Strang der Leitungselemente 22 abzweigt.

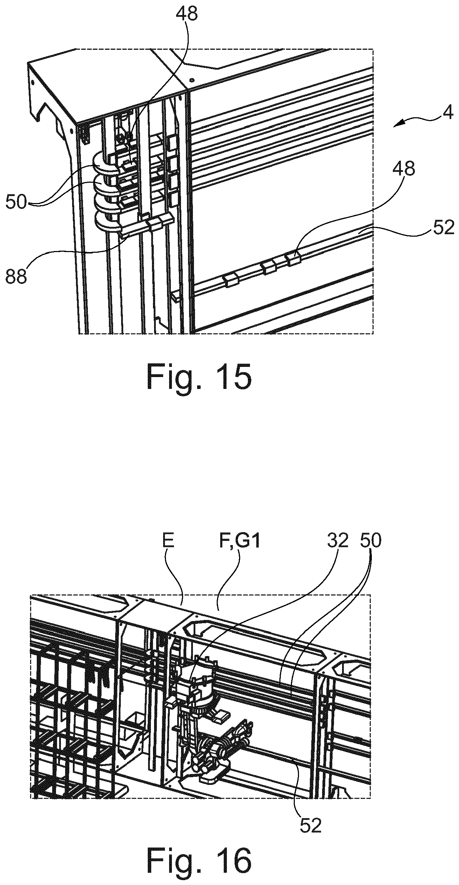

In der Fig. 15 ist eine ausschnittsweise vergrößerte Darstellung der letzten Station, nämlich der Sammelstation K mit Blick auf die Rückseite 20 dargestellt. Nachdem der endgefertigte Kabelsatz 3 in der Verpackungsstation I von den einzelnen zweiten Transportern 48 entnommen wurde, sind diese wieder frei für eine neue Bestückung. In der Sammelstation K werden diese von den einzelnen in Vertikalrichtung 14 verteilt angeordneten zweiten Schienen 50 auf die gemeinsame Rückführschiene 52 gebracht und über diese wieder in Richtung zu der Steckerstation E verbracht. Wie aus der Fig. 15 zu entnehmen ist, weist die Sammelstation K ebenfalls mehrere zweite Schienen auf, die ein 180°-Umlenkelement enthalten. Über zumindest eine rückseitige Querschiene 88 werden die zweiten Transporter 48 von den einzelnen zweiten Schienen 50 aufgenommen und in Vertikalrichtung 14 zu der gemeinsamen Rückführschiene 52 verfahren und an diese übergeben.

Die rückgeführten zweiten Transporter 48 werden im Bereich der Steckerstation E neu mit den Steckergehäusen 76 und/oder den Umlenkelementen 78 bestückt. Dies erfolgt ― wie aus der Fig. 16 ersichtlich ist, insbesondere an der Rückseite 20 mit Hilfe eines Manipulators 32.

### Bezugszeichenliste

- 2: Anlage
- 3: Kabelsatz
- 4: erster Teil
- 6: zweiter Teil
- 8: Warenlager
- 10: Gerüst
- 12: Längsrichtung
- 14: Vertikalrichtung
- 16: Querrichtung
- 18: Vorderseite
- 20: Rückseite
- 22: Leitungselement
- 24: Spulen
- 26: erstes Transportsystem
- 28: zweites Transportsystem
- 30: Bearbeitungseinheiten
- 32: Manipulator
- 34: erstes Schienensystem
- 36: Führungsschiene
- 38: erste Transporter
- 40: Positioniereinheit
- 42: Querschiene
- 44: Vertikalschiene
- 46: erste Schienen
- 48: zweite Transporter
- 50: zweite Schienen
- 52: gemeinsame Rückführschiene
- 54: Basis
- 56: Schwenkarm
- 58: Positioniergreifer
- 60: Greifer
- 62: Greifelement
- 64: Dichtelement
- 65: Röhrchen
- 68: Drehhalter
- 70: Schwenkhebel
- 72: Grundkörper
- 74: Sammelhalter
- 76: Steckergehäuse
- 78: Umlenkelement
- 80: Sprüheinheit
- 82: Bandierungseinheit
- 84: Gießeinheit
- 86: Formhälfte
- 88: rückseitige Querschiene

- A: Schneidstation
- B: Abisolierstation
- C: Kontaktierungsstation
- D: Pufferstation
- E: Steckerstation
- F: Verteilstation
- G (G1, G2, G3): Fixierstation
- H: Clipstation
- I: Verpackungsstation
- K: Sammelstation

## Patentansprüche

1. Anlage (2) zum automatisierten Herstellen eines Kabelsatzes (3), welcher eine verzweigte Struktur und mehrere einzelne Leitungselemente (22) aufweist, wobei die Anlage (2) aufweist
- einen ersten Teil (4) zur automatisierten Vorbereitung und Bereitstellung der einzelnen Leitungselemente (22)
- einen zweiten Teil (6) zum automatisierten Erzeugen des Kabelsatzes (3) aus den Leitungselementen(22),
wobei der erste Teil (4) ein erstes Transportsystem (26) sowie in einem modularen Aufbau mehrere erste Bearbeitungstationen aufweist, nämlich eine Pufferstation (D) sowie zumindest eine weitere der folgenden ersten Bearbeitungsstationen
- eine Schneidstation (A) zum Ablängen der Leitungselemente (22) von einer Spule (24)
- eine Abisolierstation (B) zum Abisolieren von Leitungsenden der Leitungselemente (22), wobei die Abisolierstation (B) in der Schneidstation (A) integriert sein kann
- eine Kontaktierungsstation (C) zum Anbringen von Kontaktelementen an den abisolierten Leitungsenden wobei
- die Pufferstation (D) zum Zwischenlagern einer Vielzahl von unterschiedlich vorbereiteten Leitungselemente (22) ausgebildet ist und die vorbereiteten Leitungselemente (22) hängend in der Pufferstation gesammelt werden
- das erste Transportsystem (26) mit ersten Transportern (38) zum individuellen Zuführen der Leitungselemente (22) zu den einzelnen ersten Bearbeitungsstationen sowie zu deren Transport zwischen den ersten Bearbeitungsstationen ausgebildet ist, wobei das erste Transportsystem (26) ein erstes Schienensystem (34) mit zumindest einer ersten Schiene (46) aufweist, wobei entlang der zumindest einen ersten Schiene (34) erste Transporter (38) verfahrbar sind und wobei das erste Schienensystem (34) eine umlaufende Führungsschiene (36) aufweist, entlang derer die ersten Transporter (38) umlaufend innerhalb des ersten Teils (4) verfahrbar sind,
wobei der zweite Teil (6) ein zweites Transportsystem (28) sowie in einem modularen Aufbau mehrere zweite Bearbeitungsstationen aufweist, nämlich zumindest eine Verteilstation (F) sowie eine Steckerstation (E), wobei
- die Steckerstation (E) zum Zusammenstellen der vorbereiteten Leitungselemente (22) eines zu fertigenden Kabelsatzes (3) ausgebildet ist und an der Steckerstation (E) bereitgestellt sind
-- ein Manipulator (32),
-- bewegbare zweite Transporter (48), die zumindest teilweise mit einem Steckergehäuse (76) zur Aufnahme der Kontaktelemente der vorbereiteten Leitungselemente (22) bestückt sind
wobei der Manipulator (32) zum Einlegen der Kontaktelemente in ein jeweiliges Steckergehäuse (76) ausgebildet ist
- die Verteilstation (F) nachfolgend zur Steckerstation angeordnet ist und zum Verteilen der zweiten Transporter (48) mit den daran gehaltenen Leitungselementen (22) in eine vorgegebenen Verteilstruktur entsprechend der verzweigten Struktur des Kabelsatzes (3) ausgebildet ist, wobei die Steckergehäuse (76) mit Hilfe der zweiten Transporter (48) an ihre Endpositionen entsprechend der verzweigten Struktur des Kabelsatzes verfahren werden, so dass der Kabelsatz in einer zweidimensionalen Ebene aufgespreizt ist,
- das zweite Transportsystem (28) zum Verfahren der zweiten Transporter (48) zwischen den einzelnen zweiten Bearbeitungsstationen ausgebildet ist, wobei das zweite Transportsystem (28) ein zweites Schienensystem mit mehreren zweiten Schienen (50) aufweist, wobei entlang der zweiten Schienen (50) die zweiten Transporter (48) verfahrbar sind, wobei das zweite Schienensystem umlaufend ausgebildet ist, so dass die zweiten Transporter sukzessive zwischen den einzelnen aufeinanderfolgenden zweiten Bearbeitungsstationen verfahren werden können und dann wieder an einen Ausgangspunkt zurückgeführt werden können.

2. Anlage (2) nach dem vorhergehenden Anspruch, bei der die einzelnen ersten Bearbeitungsstationen und/oder die einzelnen zweiten Bearbeitungsstationen jeweils vertikal ausgerichtet sind,

3. Anlage (2) nach einem der vorhergehenden Ansprüche, bei der die einzelnen ersten Bearbeitungsstationen und/oder die einzelnen zweiten Bearbeitungsstationen jeweils ein Gerüst (10) aufweisen und die einzelnen Gerüste (10) des ersten Teils (4) sowie des zweiten Teils (6) linear aneinander angeordnet sind und insbesondere auch sämtliche Gerüste (10) sowohl des ersten als auch des zweiten Teils (4, 6) sich unmittelbar aneinander anschließen und eine gemeinsame lineare Gerüstanordnung bilden.

4. Anlage (2) nach dem vorhergehenden Anspruch, bei der die ersten Schienen (46) und / oder die zweiten Schienen (50) an einer Vorderseite (18) der Gerüste (10) angeordnet sind.

5. Anlage (2) nach einem der vorhergehenden Ansprüche, wobei jede Bearbeitungsstation zumindest eine erste Schiene (46) bzw. eine zweite Schiene (50) aufweist und die ersten bzw. zweiten Schienen (46, 50) benachbarter Bearbeitungsstationen miteinander fluchten, so dass eine Übergabe der Transporter (38, 48) zwischen benachbarten Bearbeitungsstationen ermöglicht ist.

6. Anlage (2) nach einem der vorhergehenden Ansprüche, bei der das zweite Schienensystem mehrere parallel zueinander orientierte zweite Schienen (50) aufweist, welche senkrecht zu einer Längsrichtung (12) der zweiten Schienen (50), insbesondere in Vertikalrichtung (14), unabhängig voneinander und in Abhängigkeit der vorgegebenen verzweigten Struktur des Kabelsatzes (3) verstellbar sind.

7. Anlage (2) nach einem der vorhergehenden Ansprüche, bei der mehrere zweite Bearbeitungsstationen jeweils mehrere zueinander frei verstellbare zweite Schienen (50) aufweisen, wobei die zweiten Schienen (50) benachbarter zweiter Bearbeitungsstationen jeweils miteinander fluchten und wobei die zweiten Transporter (48) im Betrieb derart angesteuert werden, dass sie in der vorgegebenen Verteilstruktur zwischen benachbarten zweiten Bearbeitungsstationen übergeben werden.

8. Anlage (2) nach einem der vorhergehenden Ansprüche, bei der eine gemeinsame Rückführschiene (52) angeordnet ist, welche von der letzten zweiten Bearbeitungsstation zur Steckerstation (E) geführt ist und zur Rückführung der zweiten Transporter (48) dient.

9. Anlage (2) nach einem der vorhergehenden Ansprüche, bei der zumindest die zweiten Transporter (48) selbsttätig individuell verfahrbar sind und insbesondere elektrisch oder magnetisch antreibbar sind.

10. Anlage (2) nach einem der vorhergehenden Ansprüche, bei der insbesondere für den zweiten Teil (6) mehrere Manipulatoren (32) bereitgestellt sind, welche an einer Vorderseite (18) oder Rückseite (20) der Bearbeitungsstationen entlang verfahrbar sind, wobei insbesondere jede Bearbeitungsstation, der ein Manipulator (32) zugeordnet ist, einen eigenen Manipulator (32) aufweist.

11. Anlage (2) nach einem der vorhergehenden Ansprüche, bei der der zweite Teil (6) eine Sammelstation (K) aufweist, an der die zweiten Transporter (48) gesammelt werden.

12. Anlage (2) nach einem der vorhergehenden Ansprüche, bei der als zweite Bearbeitungsstation zumindest eine Fixierstation (G) zur Fixierung der Leitungselemente (22) aneinander vorgesehen ist und die Fixierstation (G) zumindest eine der nachfolgenden Teilstationen (G, G1, G2, G3) aufweist
- eine Sprüheinheit (80) zum Aufsprühen eines insbesondere textilen Fixiermittels auf die zu verbindenden Leitungselemente (22)
- eine Bandierungseinheit (82) zur Anbringung einer Bandierung auf die zu verbindenden Leitungselemente (22) und/ oder
- eine Gießeinheit (84) zum Anbringen einer Vergussmasse auf die zu verbindenden Leitungselemente (22).

13. Anlage (2) nach einem der vorhergehenden Ansprüche, bei der der zweite Teil (6) eine Clipstation (H) aufweist zur Befestigung von Clips.

14. Anlage (2) nach einem der vorhergehenden Ansprüche, bei der vor dem ersten Teil (4) noch ein Warenlager (8), insbesondere Hochlager, zur Bereitstellung von einer Vielzahl von unterschiedlichen Spulen (24) mit unterschiedlichen Typen von Einzelelementen aufweist und die Spulen (24) automatisch der Schneidstation (A) zuführbar sind.

15. Verfahren zum automatisierten Herstellen eines Kabelsatzes (3) mit Hilfe einer Anlage (2) nach einem der vorhergehenden Ansprüche, wobei der Kabelsatz (3) eine verzweigte Struktur und mehrere einzelne Leitungselemente (22) aufweist, wobei
- in einem ersten Teil (4) der Anlage (2) die einzelnen Leitungselemente (22) an ersten Bearbeitungsstationen automatisch vorbereitet und bereitgestellt werden
- in einem zweiten Teil (6) der Anlage (2) der Kabelsatz (3) automatisch aus den vorbereiteten Leitungselementen (22) erzeugt wird,
wobei im ersten Teil (4) folgende Schritte automatisch durchgeführt werden
- die vorbereiteten Leitungselemente (22) werden zwischengelagert
- die Leitungselemente (22) werden mit Hilfe eines ersten Transportsystems (26) mit ersten Transportern (38) individuell zu den und zwischen den einzelnen ersten Bearbeitungsstationen verfahren, wobei im ersten Teil zumindest ein weiterer der folgenden Schritte automatisch durchgeführt wird
- die Leitungselemente (22) werden von einer Spule (24) abgelängt
- Leitungsenden der Leitungselemente (22) werden abisoliert,
- Kontaktelemente werden an den abisolierten Leitungsenden angebracht, wobei im zweiten Teil (6) an zweiten Bearbeitungsstationen folgende Schritte durchgeführt werden
- an einer Steckerstation (E) werden die vorbereiteten Leitungselemente (22) eines zu fertigenden Kabelsatzes (3) zusammengestellt, wobei hierzu Steckergehäuse (76), die auf bewegbaren zweiten Transporter (48) angebracht sind, mit Kontaktelementen der vorbereiteten Leitungselemente (22) bestückt werden und / oder miteinander verbundene Leitungsenden mehrerer Leitungselemente (22) an die zweiten Transporter (48) übergeben werden,
- die bestückten zweiten Transporter (48) mit den daran gehaltenen Leitungselementen (22) anschließend in eine vorgegebenen Verteilstruktur entsprechend der verzweigten Struktur des Kabelsatzes (3) verfahren werden.

## Claims

1. Installation (2) for the automated production of a cable set (3) which has a branched structure and a plurality of individual line elements (22), wherein the installation (2) has
- a first part (4) for the automated preparation and provision of the individual line elements (22)
- a second part (6) for the automated production of the cable set (3) from the line elements (22),
wherein the first part (4) has a first transport system (26) and, in a modular structure, a plurality of first processing stations, namely a buffer station (D) and at least one further of the following first processing stations
- a cutting station (A) for cutting the line elements (22) from a reel (24)
- a stripping station (B) for stripping line ends of the line elements (22), wherein the stripping station (B) may be integrated in the cutting station (A)
- a contacting station (C) for applying contact elements to the stripped line ends, wherein
- the buffer station (D) is designed for the intermediate storage of a plurality of differently prepared line elements (22) and the prepared line elements (22) are collected in the buffer station in a suspended manner
- the first transport system (26) is designed with first transporters (38) for individually feeding the line elements (22) to the individual first processing stations and for transporting them between the first processing stations, wherein the first transport system (26) has a first rail system (34) with at least one first rail (46), wherein first transporters (38) can be moved along the at least one first rail (34) and wherein the first rail system (34) has a circulating guide rail (36) along which the first transporters (38) can be moved in a circulating manner within the first part (4),
wherein the second part (6) has a second transport system (28) and, in a modular structure, a plurality of second processing stations, namely at least one distribution station (F) and a plug station (E), wherein
- the plug station (E) is designed for assembling the prepared line elements (22) of a cable set (3) to be produced, and the following are provided at the plug station (E)
- a manipulator (32),
- movable second transporters (48) which are at least partially equipped with a plug housing (76) for receiving the contact elements of the prepared line elements (22)
wherein the manipulator (32) is designed for inserting the contact elements into a respective plug housing (76)
- the distribution station (F) is arranged downstream of the plug station and is designed for distributing the second transporters (48) with the line elements (22) held thereon into a predetermined distribution structure corresponding to the branched structure of the cable set (3), wherein the plug housings (76) are moved with the aid of the second transporters (48) to their end positions corresponding to the branched structure of the cable set, so that the cable set is spread out in a two-dimensional plane,
- the second transport system (28) is designed for moving the second transporters (48) between the individual second processing stations, wherein the second transport system (28) has a second rail system with a plurality of second rails (50), wherein the second transporters (48) can be moved along the second rails (50), wherein the second rail system is designed in a circulating manner so that the second transporters can be moved successively between the individual successive second processing stations and can then be returned to a starting point.

2. Installation (2) according to the preceding claim, in which the individual first processing stations and/or the individual second processing stations are each aligned vertically.

3. Installation (2) according to one of the preceding claims, in which the individual first processing stations and/or the individual second processing stations each have a frame (10) and the individual frames (10) of the first part (4) and of the second part (6) are arranged linearly adjacent to one another and, in particular, all the frames (10) of both the first and the second part (4, 6) directly adjoin one another and form a common linear frame arrangement.

4. Installation (2) according to the preceding claim, in which the first rails (46) and/or the second rails (50) are arranged at a front side (18) of the frames (10).

5. Installation (2) according to one of the preceding claims, wherein each processing station has at least one first rail (46) or one second rail (50) and the first or second rails (46, 50) of adjacent processing stations are aligned with one another so that a transfer of the transporters (38, 48) between adjacent processing stations is possible.

6. Installation (2) according to one of the preceding claims, in which the second rail system has a plurality of second rails (50) which are oriented parallel to one another and can be adjusted perpendicularly to a longitudinal direction (12) of the second rails (50), in particular in the vertical direction (14), independently of one another and as a function of the predetermined branched structure of the cable set (3).

7. Installation (2) according to one of the preceding claims, in which a plurality of second processing stations each has a plurality of second rails (50) which are freely adjustable relative to one another, wherein the second rails (50) of adjacent second processing stations are each aligned with one another and wherein the second transporters (48) are controlled in operation in such a way that they are transferred in the predetermined distribution structure between adjacent second processing stations.

8. Installation (2) according to one of the preceding claims, in which a common return rail (52) is arranged, which is guided from the last second processing station to the plug station (E) and serves to return the second transporters (48).

9. Installation (2) according to one of the preceding claims, in which at least the second transporters (48) can be moved automatically and individually and, in particular, can be driven electrically or magnetically.

10. Installation (2) according to one of the preceding claims, in which a plurality of manipulators (32) are provided, in particular for the second part (6), which can be moved along a front side (18) or rear side (20) of the processing stations, wherein in particular each processing station to which a manipulator (32) is assigned has its own manipulator (32).

11. Installation (2) according to one of the preceding claims, in which the second part (6) comprises a collecting station (K) at which the second transporters (48) are collected.

12. Installation (2) according to one of the preceding claims, in which at least one fixing station (G) for fixing the line elements (22) to one another is provided as the second processing station, and the fixing station (G) has at least one of the following sub-stations (G, G1, G2, G3)
- a spraying unit (80) for spraying an in particular textile fixing agent onto the line elements (22) to be connected
- a taping unit (82) for applying a taping to the line elements (22) to be connected and/or
- a casting unit (84) for applying a casting compound to the line elements (22) to be connected.

13. Installation (2) according to one of the preceding claims, in which the second part (6) has a clip station (H) for fastening clips.

14. Installation (2) according to one of the preceding claims, in which the first part (4) also has a goods store (8), in particular a high store, for providing a multiplicity of different reels (24) with different types of individual elements, and the reels (24) can be fed automatically to the cutting station (A).

15. Method for the automated production of a cable set (3) with the aid of an installation (2) according to one of the preceding claims, wherein the cable set (3) has a branched structure and a plurality of individual line elements (22), wherein
- in a first part (4) of the installation (2) the individual line elements (22) are automatically prepared and provided at first processing stations
- in a second part (6) of the installation (2), the cable set (3) is automatically produced from the prepared line elements (22),
wherein the following steps are automatically performed in the first part (4)
- the prepared line elements (22) are stored temporarily
- the line elements (22) are moved individually to and between the individual first processing stations with the aid of a first transport system (26) with first transporters (38), wherein in the first part at least one further of the following steps is performed automatically
- the line elements (22) are cut to length from a reel (24)
- line ends of the line elements (22) are stripped,
- contact elements are attached to the stripped line ends,
wherein the following steps are performed in the second part (6) at second processing stations
- the prepared line elements (22) of a cable set (3) to be produced are assembled at a plug station (E), wherein for this purpose plug housings (76), which are mounted on movable second transporters (48), are fitted with contact elements of the prepared line elements (22) and/or interconnected line ends of a plurality of line elements (22) are transferred to the second transporters (48),
- the equipped second transporters (48), with the line elements (22) held thereon, are then moved into a predetermined distribution structure corresponding to the branched structure of the cable set (3).

## Revendications

1. Installation (2) destinée à la fabrication automatisée d'un jeu de câbles (3) qui présente une structure ramifiée et comporte plusieurs éléments conducteurs (22) individuels, l'installation (2) comportant
- une première partie (4) destinée à la préparation et la fourniture automatisées des éléments conducteurs (22) individuels
- une seconde partie (6) destinée à la production automatisée du jeu de câbles (3) à partir des éléments conducteurs (22),
la première partie (4) comportant un premier système de transport (26) ainsi que plusieurs premiers postes de traitement en une structure modulaire, à savoir un poste tampon (D) ainsi qu'au moins un autre des premiers postes de traitement suivants
- un poste de coupe (A) destiné a la coupure à longueur des éléments conducteurs (22) à partir d'une bobine (24)
- un poste de dénudage (B) destiné au dénudage des extrémités de conducteurs des éléments conducteurs (22), le poste de dénudage (B) pouvant être intégré dans le poste de coupe (A)
- un poste de formation de contacts (C) destiné à l'application d'éléments de contact sur les extrémités dénudées des conducteurs, dans laquelle
- le poste tampon (D) est conçu pour le logement intermédiaire d'une pluralité d'éléments conducteurs (22) différemment préparés et les éléments conducteurs (22) préparés sont collectés en étant suspendus dans le poste tampon
- le premier système de transport (26) est conçu, avec les premiers transporteurs (38), pour l'envoi individuel des éléments conducteurs (22) aux premiers postes de traitement individuels ainsi que pour leur transport entre les premiers postes de traitement, le premier système de transport (26) comportant un premier système de rails (34) comportant au moins un premier rail (46), les premiers transporteurs (38) étant déplaçables le long dudit au moins un premier rail (34) et le premier système de rails (34) comportant un rail de guidage (36) en circuit, le long duquel les premiers transporteurs (38) sont déplaçables en circuit à l'intérieur de la première partie (4),
dans laquelle la seconde partie (6) comporte un second système de transport (28) ainsi que plusieurs seconds postes de traitement en une structure modulaire, à savoir au moins un poste répartiteur (F) ainsi qu'un poste connecteur (E),
- le poste connecteur (E) étant conçu pour la jonction des éléments conducteurs (22) préparés d'un jeu de câbles (3) à fabriquer et qui sont fournis au poste connecteur (E)
- un manipulateur (32),
- des seconds transporteurs (48) mobiles, qui sont au moins en partie munis d'un boîtier (76) de connecteur destiné à la réception des éléments de contact des éléments conducteurs (22) préparés
le manipulateur (32) étant conçu pour l'insertion des éléments de contact dans un boîtier (76) de connecteur respectif
- le poste répartiteur (F) est disposé à la suite du poste connecteur et est conçu pour la répartition des seconds transporteurs (48) avec les éléments conducteurs (22) maintenus sur ceux-ci, en une structure répartie préétablie correspondant à la structure ramifiée du jeu de câbles (3), les boîtiers (76) de connecteurs étant amenés à l'aide des seconds transporteurs (48) à leurs positions finales correspondant à la structure ramifiée du jeu de câbles, de sorte que le jeu de câbles est déployé dans un plan bidimensionnel,
- le second système de transport (28) est conçu pour le déplacement des seconds transporteurs (48) entre les seconds postes de traitement individuels, le second système de transport (28) comportant un second système de rails comportant plusieurs seconds rails (50), les seconds transporteurs (48) étant déplaçables le long des seconds rails (50), le second système de rail étant configuré en circuit, de sorte que les seconds transporteurs peuvent être amenés successivement entre les seconds postes de traitement individuels se succédant et ensuite renvoyés de nouveau à un point de départ.

2. Installation (2) selon la revendication précédente, dans laquelle les premiers postes de traitement individuels et/ou les seconds postes de traitement individuels sont disposés chacun verticalement.

3. Installation (2) selon l'une quelconque des revendications précédentes, dans laquelle les premiers postes de traitement individuels et/ou les seconds postes de traitement individuels comportent chacun un châssis (10) et les châssis (10) individuels de la première partie (4) ainsi que de la seconde partie (6) sont disposés en ligne les uns à la suite des autres et en particulier tous les châssis (10) aussi bien de la première que de la seconde partie (4, 6) se font également immédiatement suite les uns aux autres et forment un système de châssis linéaire commun.

4. Installation (2) selon la revendication précédente, dans laquelle les premiers rails (46) et/ou les seconds rails (50) sont disposés sur un côté avant (18) des châssis (10).

5. Installation (2) selon l'une quelconque des revendications précédentes, dans laquelle chaque poste de traitement comporte au moins un premier rail (46) ou un second rail (50) et les premiers et, respectivement, seconds rails (46, 50) de postes de traitement voisins s'alignent entre eux, ce qui permet un transfert des transporteurs (38, 48) entre des postes de traitement voisins.

6. Installation (2) selon l'une quelconque des revendications précédentes, dans laquelle le second système de rail comporte plusieurs seconds rails (50) orientés parallèlement entre eux, qui sont ajustables perpendiculairement à une direction longitudinale (12) des seconds rails (50) en particulier en direction verticale (14), indépendamment les uns des autres et en fonction de la structure ramifiée préétablie du jeu de câbles (3).

7. Installation (2) selon l'une quelconque des revendications précédentes, dans laquelle plusieurs seconds postes de traitement comportent chacun plusieurs seconds rails (50) ajustables librement les uns par rapport aux autres, les seconds rails (50) de seconds postes de traitement voisins s'alignant chaque fois entre eux et, en fonctionnement, les seconds transporteurs (48) étant dirigés de telle façon qu'ils sont transférés entre des seconds postes de traitement voisins en la structure répartie préétablie.

8. Installation (2) selon l'une quelconque des revendications précédentes, dans laquelle est disposé un rail de renvoi (52) commun, qui du dernier second poste de traitement est envoyé au poste connecteur (E) et sert au renvoi des seconds transporteurs (48).

9. Installation (2) selon l'une quelconque des revendications précédentes, dans laquelle au moins les seconds transporteurs (48) sont automatiquement déplaçables individuellement et en particulier déplaçables par entraînement électrique ou magnétique.

10. Installation (2) selon l'une quelconque des revendications précédentes, dans laquelle en particulier pour la seconde partie (6) sont fournis plusieurs manipulateurs (32) qui sont déplaçables le long d'un côté avant (18) ou côté arrière (20) des postes de traitement, en particulier chaque poste de traitement, auquel est affecté un manipulateur (32), comportant un manipulateur (32) propre.

11. Installation (2) selon l'une quelconque des revendications précédentes, dans laquelle la seconde partie (6) comporte un poste collecteur (K) sur lequel les seconds transporteurs (48) sont collectés.

12. Installation (2) selon l'une quelconque des revendications précédentes, dans laquelle est prévu en tant que second poste de traitement au moins un poste de fixation (G) destiné à la fixation des éléments conducteurs (22) les uns aux autres et le poste de fixation (G) comporte au moins un des postes partiels (G, G1, G2, G3) suivants
- une unité de pulvérisation (80) destinée à la pulvérisation d'un fixateur en particulier textile sur les éléments conducteurs (22) à raccorder
- une unité de bandage (82) destinée à l'application d'un bandage sur les éléments conducteurs (22) à raccorder et/ou
- une unité de coulée (84) destinée à l'application d'une matière de scellement sur les éléments conducteurs (22) à raccorder.

13. Installation (2) selon l'une quelconque des revendications précédentes, dans laquelle la seconde partie (6) comporte un poste de fixation d'attaches (H) destiné à la fixation d'attaches.

14. Installation (2) selon l'une quelconque des revendications précédentes, dans laquelle avant la première partie (4) est encore présent un magasin (8), en particulier magasin vertical, destiné à la fourniture d'une pluralité de bobines (24) différentes à types différents d'éléments individuels et les bobines (24) peuvent être envoyées automatiquement au poste de coupe (A).

15. Procédé destiné à la fabrication automatique d'un jeu de câbles (3) à l'aide d'une installation (2) selon l'une quelconque des revendications précédentes, le jeu de câbles (3) présentant une structure ramifiée et comportant plusieurs éléments conducteurs (22) individuels, dans lequel
- dans une première partie (4) de l'installation (2) les éléments conducteurs (22) individuels sont automatiquement préparés et fournis sur des premiers postes de traitement
- dans une seconde partie (6) de l'installation (2) le jeu de câbles (3) est automatiquement produit à partir des éléments conducteurs (22) préparés,
dans la première partie (4) les étapes suivantes étant automatiquement exécutées
- les éléments conducteurs (22) préparés sont logés intermédiairement
- les éléments conducteurs (22) sont individuellement déplacés, à l'aide d'un premier système de transport (26) comportant des premiers transporteurs (38), vers les et entre les premiers postes de traitement individuels, dans la première partie au moins une autre des étapes suivantes étant automatiquement exécutée
- les éléments conducteurs (22) sont coupes à longueur à partir d'une bobine (24)
- les extrémités de conducteurs des éléments conducteurs (22) sont dénudées
- des éléments de contact sont appliqués sur les extrémités dénudées des conducteurs,
dans la seconde partie (6) les étapes suivantes étant exécutées sur les seconds postes de traitement
- les éléments conducteurs (22) préparés d'un jeu de câbles (3) à fabriquer sont réunis sur un poste connecteur (E), à cette fin des boîtiers (76) de connecteurs, qui sont placés sur des seconds transporteurs (48) mobiles, étant munis d'éléments de contact des éléments conducteurs (22) préparés et/ou des extrémités de conducteurs de plusieurs éléments conducteurs (22), raccordées entre elles, étant amenées sur les seconds transporteurs (48),
- les seconds transporteurs (48), munis des éléments conducteurs (22) maintenus sur ceux-ci, sont ensuite mis en une structure répartie correspondant à la structure ramifiée du jeu de câbles (3).
